# EUROPÄISCHE PATENTSCHRIFT

(11) **EP 4 016 809 B1**
(45) Veröffentlichungstag und Bekanntmachung des Hinweises auf die Patenterteilung: **04.01.2023**
(21) Anmeldenummer: 20215456.3
(22) Anmeldetag: 18.12.2020
(51) Int. Cl.: H02K 7/18, F03D 13/40, H02K 15/00, H02K 15/03, H02K 15/02, H02K 1/27, H02K 21/22

(54) **SEGMENTIERTER GENERATOR, GENERATORSEGMENT UND WINDENERGIEANLAGE SOWIE VERFAHREN ZUR TRANSPORTVORBEREITUNG, ZUM TRANSPORT UND ZUR MONTAGE EINES SEGMENTIERTEN GENERATORS SOWIE VERFAHREN ZUR MONTAGE EINER WINDENERGIEANLAGE**
SEGMENTED GENERATOR, GENERATOR SEGMENT AND WIND TURBINE AS WELL AS METHOD FOR PREPARATION FOR TRANSPORTATION, METHOD FOR TRANSPORTATION AND ASSEMBLING METHOD FOR A SEGMENTED GENERATOR AS WELL AS METHOD FOR INSTALLING A WIND TURBINE
GÉNÉRATEUR SEGMENTÉ, SEGMENT DE GÉNÉRATEUR ET ÉOLIENNE, AINSI QUE PROCÉDÉ DE PRÉPARATION DE TRANSPORT, PROCÉDÉ DE TRANSPORT ET PROCÉDÉ DE MONTAGE D'UN GÉNÉRATEUR SEGMENTÉ, AINSI QUE PROCÉDÉ DE MONTAGE D'UNE ÉOLIENNE.

(43) Veröffentlichungstag der Anmeldung: 22.06.2022
(73) Patentinhaber: Wobben Properties GmbH, 26607 Aurich (DE)
(72) Erfinder: Feith, Manuel, 26427 Esens (DE); Giengiel, Wojciech, 26607 Aurich (DE); Jöckel, Stephan, 67259 Kleinniedesheim (DE); Philipp, Alexander, 68799 Reilingen (DE); Bauer, Sebastian, 26605 Aurich (DE); Fischer, Lars, 26506 Norden (DE); Gudewer, Wilko, 26506 Norden (DE); Recktenwald, Andreas, 66121 Saarbrücken (DE)
(74) Vertreter: Eisenführ Speiser

(56) Entgegenhaltungen:
- EP-A1- 0 953 668
- EP-A1- 2 731 232
- EP-A2- 1 772 624
- EP-A2- 2 632 030
- WO-A1-2015/024590
- WO-A1-2020/034266
- DE-A1-102010 039 590
- DE-A1-102012 208 547

## Beschreibung

Die Erfindung betrifft ein Generatorsegment eines segmentierten Generators für eine Windenergieanlage, einen segmentierten Generator für eine Windenergieanlage und eine Windenergieanlage. Ferner betrifft die Erfindung ein Verfahren zur Transportvorbereitung eines segmentierten Generators einer Windenergieanlage, ein Verfahren zum Transport eines segmentierten Generators einer Windenergieanlage, ein Verfahren zur Montage eines segmentierten Generators einer Windenergieanlage und ein Verfahren zur Montage einer Windenergieanlage.

Eine Windenergieanlage ist eine Anlage, die kinetische Energie von Wind in elektrische Energie wandelt und in ein Stromnetz einspeist. Für die Wandlung der kinetischen Energie zur elektrischen Energie umfasst die Windenergieanlage einen Generator mit einem Rotor, der relativ zu einem Stator um eine Drehachse drehbar gelagert ist. In Abhängigkeit der Lage der Drehachse wird zwischen einer horizontalen und einer vertikalen Windenergieanlage unterschieden. Bei der horizontalen Windenergieanlage ist die Drehachse horizontal ausgerichtet. Bei der vertikalen Windenergieanlage ist die Drehachse vertikal ausgerichtet. Horizontale Windenergieanlagen sind auch als Horizontalachsen-Windenergieanlagen und vertikale Windenergieanlagen sind auch als Vertikalachsen-Windenergieanlagen bekannt.

Moderne Windenergieanlagen betreffen in der Regel sogenannte Horizontalachsen-Windenergieanlagen, bei denen die Drehachse im Wesentlichen horizontal angeordnet ist und die Rotorblätter eine im Wesentlichen senkrechte Rotorfläche überstreichen. Ferner weisen Windenergieanlagen eine Gondel auf, die um eine im Wesentlichen vertikale Achse drehbar auf einem Turm der Windenergieanlage angeordnet ist.

Der Wind bewirkt in einem Betriebszustand der Windenergieanlage eine Drehbewegung der Rotorblätter, die den Rotor eines Generators, welcher mit den Rotorblättern gekoppelt ist, antreiben. In dem Betriebszustand drehen die Rotorblätter und der Rotor relativ zu einem Stator des Generators. Bedingt durch die Relativbewegung zwischen Rotor und Stator erzeugt der (elektrische) Generator elektrische Energie. In dem Betriebszustand der Windenergieanlage ist die Windenergieanlage am Aufstellort aufgebaut und wird für die Wandlung der kinetischen Energie des Windes in elektrische Energie betrieben.

Windenergieanlagen können getriebelos oder mit einem Getriebe ausgeführt sein. Insbesondere getriebelose Windenergieanlagen weisen Generatoren mit einem großen Durchmesser auf. Es ist durchaus üblich, dass die Generatoren einen Durchmesser von 5 m und mehr aufweisen. Diese Generatoren können als sogenannte Innenläufer oder als sogenannte Außenläufer ausgeführt sein. Bei einem Innenläufer ist der mit den Rotorblättern rotierende Rotor des Generators innerhalb eines feststehenden Stators des Generators angeordnet. Bei einem Außenläufer ist der Rotor außerhalb des Stators angeordnet. Bei dem Außenläufer ist der Stator insbesondere innerhalb des Rotors, vorzugsweise in Bezug zu dem Rotor radial innenliegend angeordnet. Unabhängig von der Art des Generators sind Generatoren üblicherweise an der Gondel, insbesondere einem Maschinenträger, der Windenergieanlage befestigt.

Generatoren können eine Masse von 150 t und mehr erreichen. Somit ist der Transport solcher Generatoren stets mit einem hohen Aufwand verbunden. Je nach Größe des Durchmessers und der Masse des Generators kann ein straßengebundener Transport auch schlichtweg unmöglich sein. Um auch Generatoren mit einem großen Durchmesser und einer großen Masse transportieren zu können, ist es bekannt, Generatoren als segmentierten Generator auszubilden. Ein solch segmentierter Generator weist zwei oder mehrere Generatorsegmente auf. Die Generatorsegmente sind üblicherweise teilringförmig ausgebildet bzw. weisen eine teilringförmige Geometrie auf. Die Generatorsegmente werden in der Regel zu einem ringförmigen segmentierten Generator angeordnet. Üblicherweise werden Generatorsegmente vereinzelt zu dem Aufstellort einer Windenergieanlage transportiert.

Der Transport von Generatorsegmenten eines segmentierten Generators mit Elektromagneten ist ohne großen Aufwand ohne weiteres möglich. Sind diese stromlos, wirken keine Magnetkräfte. Weist ein solch segmentierter Generator hingegen Permanentmagneten auf, müssen zusätzliche Befestigungsvorrichtungen vorgesehen werden, die ein Rotorsegment gegenüber einem Statorsegment in einer gewünschten Position halten und den Magnetkräften der Permanentmagnete entgegenwirken. Solche Befestigungsvorrichtungen, die ein Rotorsegment gegenüber einem Statorsegment halten, sind beispielsweise aus EP 2 508 749 B1 und EP 2 454 803 B1 bekannt. Aus WO 2015/024590 A1 ist eine Plattform zur Montage und Demontage einer permanenterregten elektrischen Maschine bekannt.

In EP 0 953 668 A1 ist ein Verfahren zur Montage eines Antriebsmotors eines Wäschebehandlungsgeräts beschrieben.

Das Zusammensetzen dieser trotz Segmentierung unhandlichen Bauteile ist mit Herausforderungen verbunden. Einerseits ist das Handhabung der Bauteile auf der Baustelle schwierig und darüber hinaus ist das präzise Einstellen eines Luftspalts zwischen dem Rotor und dem Stator mit der erforderlichen Genauigkeit lediglich mit Hilfsmitteln möglich. Darüber hinaus ist die Wartungsmöglichkeit der bestehenden Lösungen eingeschränkt, sodass die Wartung häufig aufwendig und kostenintensiv ist.

Es ist deshalb eine Aufgabe der vorliegenden Erfindung, einen segmentierten Generator für eine Windenergieanlage, ein Generatorsegment des segmentierten Generators, eine Windenergieanlage sowie ein Verfahren zur Transportvorbereitung eines segmentierten Generators, ein Verfahren zum Transport des segmentierten Generators, ein Verfahren zur Montage des segmentierten Generators und ein Verfahren zur Montage einer Windenergieanlage bereitzustellen, die einen oder mehrere der genannten Nachteile beseitigen oder vermindern. Insbesondere ist es eine Aufgabe der vorliegenden Erfindung, eine Lösung bereitzustellen, die eine bessere Transportierbarkeit und/oder einen reduzierten Montageaufwand und/oder eine bessere Wartbarkeit ermöglicht.

Gemäß einem Aspekt wird die Aufgabe durch einen segmentierten Generator für eine Windenergieanlage nach Anspruch 5 gelöst.

Sofern nicht ausdrücklich abweichend ausgeführt, sind Angaben zu einer Axialrichtung, einer Umfangsrichtung und einer Radialrichtung in der Beschreibung in Bezug auf eine Drehachse des Generators zu verstehen. Die Axialrichtung entspricht einer Richtung parallel, d.h. entlang der Drehachse. Die Umfangsrichtung entspricht einer Richtung im Wesentlichen tangential zu der Drehachse. Die Radialrichtung entspricht einer Richtung radial zu der Drehachse.

Der segmentierte Generator ist vorzugsweise als permanenterregter Generator ausgebildet ist. Es kann allerdings auch bevorzugt sein, dass dersegmentierte Generator als fremderregter Generator ausgebildet ist und insofern dessen Generatorsegmente, Rotorsegmente und Statorsegmente in bevorzugter Weise für den fremderregten Betrieb ausgebildet sind.

Der segmentierte Generator für eine Windenergieanlage umfasst zwei oder mehrere Generatorsegmente. Die zwei oder mehr Generatorsegmente sind bevorzugt ringförmig angeordnet. Insbesondere sind die zwei oder mehr Generatorsegmente koaxial zu einer Drehachse des segmentierten Generators angeordnet. Insbesondere umfasst der segmentierte Generator einen segmentierten Rotor und einen segmentierten Stator. Der segmentierte Rotor umfasst zwei oder mehrere Rotorsegmente. Der segmentierte Stator umfasst zwei oder mehrere Statorsegmente.

Das jeweilige Generatorsegment bzw. das jeweilige Rotorsegment und/oder das jeweilige Statorsegment sind bezogen auf die Drehachse in einer Umfangsrichtung vorzugsweise teilringförmig ausgebildet. Insbesondere weisen das Generatorsegment bzw. das Rotorsegment und/oder das Statorsegment eine teilringförmige Geometrie auf. Ein Generatorsegment bzw. ein Rotorsegment und/oder ein Statorsegment, welches entsprechend teilringförmig ausgebildet ist oder eine teilringförmige Geometrie aufweist, erstreckt sich in der Umfangsrichtung mit einem bestimmten Bogengrad zwischen einer ersten und zweiten Trennschnittstelle.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahl der jeweiligen Segmente nach folgender Formel: 360°/(Anzahl der Segmente). Hiernach erstrecken sich beispielsweise die Generatorsegmente eines segmentierten Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten.

Es kann auch bevorzug sein, dass die Generatorsegmente, aus denen ein segmentierter Generator zusammengesetzt wird, sich in der Umfangsrichtung mit einem unterschiedlichen Bogengrad erstrecken. Beispielsweise kann ein segmentierter Generator aus drei Generatorsegmenten gebildet sein. Bei einem solchen segmentierten Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines segmentierten Rotors und/oder ein Statorsegment eines segmentierten Stators gelten.

Die erste und zweite Trennschnittstelle erstrecken sich im Wesentlichen orthogonal zu der Umfangsrichtung. Insbesondere definieren die erste und zweite Trennschnittstelle eine erste und zweite Trennschnittstellenebene, innerhalb derer sich die Drehachse erstreckt. Insbesondere erstrecken sich die erste und/oder zweite Trennschnittstelle derart, dass die erste und/oder zweite Trennschnittstellenebene sich in Bezug zu der Drehachse in einer Radialrichtung erstrecken. Insbesondere schneiden sich die erste und/oder zweite Trennschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Trennschnittstellenebene, die sich in Bezug zu der Drehachse in der Radialrichtung erstrecken.

Die erste und/oder zweite Trennschnittstelle eines Generatorsegments weist eine Verbindungsvorrichtung auf. Die Verbindungsvorrichtung an der ersten und/oder zweiten Trennschnittstelle ist dazu ausgebildet, benachbarte Generatorsegmente, die zu einem segmentierten Generator angeordnet sind, miteinander zu verbinden. Die Verbindungsvorrichtung der ersten und/oder zweiten Trennschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Trennschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines segmentierten Rotors und/oder ein Statorsegment eines segmentierten Stators gelten.

Insbesondere kann bevorzugt sein, dass das Rotorsegment, insbesondere dessen Magnetträgersegment, sich in der Umfangsrichtung zwischen der ersten und zweiten Trennschnittstelle mit einer Segmentlänge erstreckt, wobei das Rotorsegment bzw. das Magnetträgersegment eine Außenumfangsfläche aufweist mit einem ersten Trennschnittstellenabschnitt mit einer ersten Länge ausgehend von der ersten Trennschnittstelle in der Umfangsrichtung in Richtung der zweiten Trennschnittstelle; und einem zweiten Trennschnittstellenabschnitt mit einer zweiten Länge ausgehend von der zweiten Trennschnittstelle in der Umfangsrichtung in Richtung der ersten Trennschnittstelle; und einem Verbindungsabschnitt mit einer dritten Länge, die sich zwischen der ersten und zweiten Trennschnittstelle erstreckt; wobei im Bereich des ersten und zweiten Trennschnittstellenabschnitts an der Rotorumfangsfläche jeweils eine Versteifungsvorrichtung zur Versteifung des Magnetträgersegments angeordnet ist. Ergänzend oder alternativ kann bevorzugt sein, dass das Rotorsegment ein Versteifungsringsegment und/oder eine Versteifungsscheibe aufweist.

Ergänzend oder alternativ ist ferner bevorzugt, dass der segmentierte Generator als permanenterregter segmentierter Generator ausgebildet ist. In dieser bevorzugten Ausführung ist vorgesehen, dass an dem Rotor ein oder mehrere Permanentmagnete angeordnet sind. Ein Permanentmagnet, auch Dauermagnet genannt, ist ein Magnet, der ein gleichbleibendes Magnetfeld aufweist, welches nicht-wie bei Elektromagneten - durch eine elektrische Leistung erzeugt wird. Der Permanentmagnet umfasst ein oder besteht aus einem magnetisierten Material. Beispiele magnetisierter Materialien eines Permanentmagneten sind Legierungen aus Eisen, Cobalt, Nickel etc.

Vorzugsweise ist der segmentierte Generator als Außenläufer ausgebildet. Bei einem als Außenläufer ausgebildeten segmentierten Generator befindet sich der Stator bzw. segmentierte Stator gegenüber dem Rotor bzw. segmentierten Rotor in Bezug zu der Drehachse in der Radialrichtung innenliegend. Üblicherweise umschließt bei einem als Außenläufer ausgebildeten segmentierten Generator dessen radial außenliegender segmentierter Rotor den radial innenliegenden segmentierten Stator.

Mit der segmentierten Bauweise des Generators lassen sich transportbedingte Größenbeschränkungen eines Generators überwinden. Insbesondere können segmentierte Generatoren, durch den vereinzelten Transport der Generatorsegmente, auch zu schwierig zugänglichen Aufstellorten von Windenergieanlagen transportiert und auf dem Turm der Windenergieanlagen an der Gondel montiert werden. Insbesondere sind für die Montage eines segmentierten Generators keine großen und teuren Spezialkräne erforderlich. Vielmehr lassen sich die Generatorsegmente einzeln an der Gondel bzw. dem Maschinenträger mit einem kleinen Kran positionieren, der lediglich die Masse eines einzelnen Generatorsegments tragen sowie die Montagehöhe erreichen muss. Hierdurch lassen sich Kosten einsparen, die ansonsten für die wesentlich teureren großen Kräne anfallen. Ferner sind solch großen Kräne in der Regel nur beschränkt verfügbar, so dass man durch den segmentierten Generator hinsichtlich der Montagezeit und auch dem Montageort an Flexibilität gewinnt.

Für weitere Vorteile, Ausführungsvarianten und Ausführungsdetails des erfindungsgemäßen segmentierten Generators und seinen Fortbildungen wird auch auf die nachfolgende Beschreibung zu den entsprechenden Merkmalen und Fortbildungen des Generatorsegments, der Windenergieanlage und der Verfahren verwiesen.

Gemäß einem weiteren Aspekt wird die Aufgabe durch ein Generatorsegment eines segmentierten Generators für eine Windenergieanlage nach Anspruch 1 gelöst.

Ein solches Generatorsegment eines segmentierten Generators einer Windenergieanlage umfasst, wie zuvor auch schon beschrieben, ein Rotorsegment eines Rotors und ein Statorsegment eines Stators. Es ist vorgesehen, dass das Rotorsegment und das Statorsegment in einer Betriebsposition mit einem Luftspalt in einer Radialrichtung beabstandet zueinander angeordnet sind und mit einem Axialabstand in einer Axialrichtung beabstandet zueinander angeordnet sind. Das Rotorsegment und das Statorsegment sind relativ zueinander um den Axialabstand entlang einer Drehachse zwischen einer Betriebsposition und einer Transportposition, die von der Betriebsposition verschieden ist, anordenbar und/oder verschiebbar.

Das Rotorsegment weist insbesondere ein Magnetträgersegment mit einer ringförmigen oder teilringförmigen Geometrie, mindestens ein Rotor-Blechpaket und einer Rotor-Innenumfangsfläche auf. Insbesondere ist das mindestens eine Rotor-Blechpaket stoffschlüssig und/oder kraftschlüssig und/oder formschlüssig mit dem Magnetträgersegment verbunden. Vorzugsweise sind mehrere Magneteinheiten an dem Rotor-Blechpaket in der Umfangsrichtung beabstandet zueinander angeordnet und bilden und/oder definieren die Rotor-Innenumfangsfläche. Die mindestens eine Magneteinheit ist insbesondere stoffschlüssig mit dem Rotor-Blechpaket verbunden. Vorzugsweise verbindet eine Vergussmasse, die die Magneteinheit zumindest teilweise umschließt, die Magneteinheit mit dem Rotor-Blechpaket. Die Magneteinheiten sind auch als Rotor-Aktivteil bekannt.

Das Statorsegment weist insbesondere einen Spulenträgersegment mit einer ringförmigen oder teilringförmigen Geometrie, eine erste und zweite Trägerplatte und eine Stator-Umfangsstruktur auf. Die erste und zweite Trägerplatte sind in der Axialrichtung beabstandet zueinander angeordnet. Vorzugsweise verbindet die Stator-Umfangsstruktur die erste und zweite Trägerplatte miteinander. Die Stator-Umfangsstruktur ist beispielsweise eine Anordnung von einer oder mehreren Axialstreben, die eine Haupterstreckungsrichtung im Wesentlichen entlang der Drehachse in der Axialrichtung aufweisen. Mehrere Axialstreben sind insbesondere in Umfangsrichtung beabstandet zueinander, vorzugsweise äquidistant, angeordnet. Es ist zu verstehen, dass Spulenträgersegment in bevorzugter Weise die erste und zweite Trägerplatte und/oder die Stator-Umfangsstruktur integral, insbesondere einstückig, ausbildet. Vorzugsweise ist an der Stator-Umfangsstruktur mindestens ein Stator-Blechpaket zur Aufnahme mindestens einer Spuleneinheit angeordnet. Insbesondere ist das mindestens eine Stator-Blechpaket mit einer Stator-Befestigungsvorrichtung an dem Spulenträgersegment befestigt. Die Stator-Befestigungsvorrichtung ist beispielsweise als Klemmvorrichtung ausgebildet zur kraft- und/oder formschlüssigen Verbindung des mindestens einen Stator-Blechpakets an dem Spulenträgersegment. Insbesondere sind an dem Statorblechpaket mehrere Spuleneinheiten angeordnet. Das Statorblechpaket mit den daran angeordneten Spuleneinheiten ist auch als Stator-Aktivteil bekannt.

In der Betriebsposition des Generatorsegments sind der Stator-Aktivteil und der Rotor-Aktivteil in der Axialrichtung vorzugsweise nicht versetzt, insbesondere zentriert zueinander angeordnet. Insbesondere sind das Stator-Aktivteil und das Rotor-Aktivteil in der Axialrichtung in der Betriebsposition um 0 mm zueinander versetzt angeordnet. In der Transportposition des Generatorsegments sind der Stator-Aktivteil und der Rotor-Aktivteil in der Axialrichtung vorzugsweise versetzt, insbesondere nicht zentriert zueinander angeordnet. Vorzugsweise sind das Stator-Aktivteil und das Rotor-Aktivteil in der Axialrichtung in der Transportposition zueinander mit dem Axialabstand versetzt angeordnet.

Insbesondere kann es bevorzugt sein, dass das Statorsegment stationär angeordnet ist und das Rotorsegment relativ zu dem Statorsegment um den Axialabstand entlang der Drehachse zwischen der Betriebsposition und der Transportposition, die von der Betriebsposition verschieden ist, anordenbar und/oder verschiebbar ist. Es kann auch bevorzugt sein, dass das Rotorsegment stationär angeordnet ist und das Statorsegment relativ zu dem Rotorsegment um den Axialabstand entlang der Drehachse zwischen der Betriebsposition und der Transportposition, die von der Betriebsposition verschieden ist, anordenbar und/oder verschiebbar ist.

In der Betriebsposition sind das Rotorsegment und das Statorsegment insbesondere derart zueinander positioniert und ausgerichtet, dass der Luftspalt und der Axialabstand zwischen dem Rotorsegment und dem Statorsegment jeweils dem Luftspalt und dem Axialabstand zwischen dem segmentierten Rotor und dem segmentierten Stator eines segmentierten Generators in dem Betriebszustand der Windenergieanlage entspricht. In der Transportposition sind das Rotorsegment und das Statorsegment bevorzugt derart zueinander positioniert und ausgerichtet, dass der Axialabstand zwischen dem Rotorsegment und dem Statorsegment nicht dem Axialabstand zwischen dem segmentierten Rotor und dem segmentierten Stator eines segmentierten Generators in der Betriebsposition entspricht. Das Rotorsegment und das Statorsegment weisen vorzugsweise eine oder mehrere Kontaktflächen auf. Vorzugsweise weisen das Rotorsegment und/oder das Statorsegment in der Umfangsrichtung äquidistant zueinander angeordnete Kontaktflächen auf. Vorzugsweise sind die Kontaktflächen um 15°, 30°, 45° oder 90° beabstandet zueinander angeordnet. Vorzugsweise liegen das Rotorsegment und das Statorsegment in der Transportposition zumindest punktuell und/oder abschnittsweise an der jeweils einen oder den jeweiligen mehreren Kontaktflächen aneinander an. In der Transportposition stehen das Rotorsegment und das Statorsegment insbesondere miteinander in Kontakt. Insbesondere ist in der Transportposition der Axialabstand zwischen der einen oder den mehreren Kontaktflächen des Rotorsegments und des Statorsegments gleich 0 mm.

In der Betriebsposition beträgt der Axialabstand zwischen der einen oder den mehreren Kontaktflächen des Rotorsegments und des Statorsegments mehr als 0 mm zwischen der einen oder den mehreren Kontaktflächen des Rotorsegments und der einen oder den mehreren Kontaktflächen des Statorsegments. Insbesondere beträgt der Axialabstand in der Betriebsposition zwischen der einen oder den mehreren Kontaktflächen des Rotorsegments und der einen oder den mehreren Kontaktflächen des Statorsegments mindestens 2 mm, 5 mm, 7,5 mm, 10 mm, 12 mm, 15 mm, 20 mm oder mehr. Ferner bevorzugt beträgt der Axialabstand zwischen der einen oder den mehreren Kontaktflächen des Rotorsegments und der einen oder den mehreren Kontaktflächen des Statorsegments maximal 100 mm, 50 mm, 20 mm, 15 mm, 12 mm, 10 mm, 7,5 mm, 5 mm oder weniger.

Beim Verschieben des Rotorsegments und des Statorsegments relativ zueinander von der Betriebsposition in die Transportposition ist das Generatorsegment vorzugsweise derart ausgerichtet, dass die Drehachse vertikal orientiert ist. Diese vertikale Orientierung ist insbesondere bei einem Transport mit einer als Lastkraftwagen ausgebildeten Transportvorrichtung bevorzugt. Es kann aber auch bevorzugt sein, dass beim Verschieben des Rotorsegments und des Statorsegments relativ zueinander von der Betriebsposition in die Transportposition das Generatorsegment vorzugsweise derart ausgerichtet, dass die Drehachse horizontal orientiert ist. Diese horizontale Orientierung ist insbesondere bei einem Transport mit einer als Transportschiff ausgebildeten Transportvorrichtung bevorzugt. Beim Verschieben des Rotorsegments und des Statorsegments relativ zueinander von der Transportposition in die Betriebsposition ist das Generatorsegment vorzugsweise derart ausgerichtet, dass die Drehachse nicht vertikal orientiert ist. Insbesondere ist die Drehachse beim Verschieben des Rotorsegments und des Statorsegments relativ zueinander von der Transportposition in die Betriebsposition im Wesentlichen horizontal ausgerichtet.

Der Luftspalt ist ein in einer Umfangsrichtung, tangential bzw. parallel zu der Drehachse, umlaufender Luftspalt zwischen Rotor und Stator. Der Luftspalt entspricht insbesondere einem Abstand zwischen einem Rotor und einem Stator, insbesondere einem Abstand einer Rotor-Innenumfangsfläche und einer Stator-Außenumfangsfläche, sofern der Generator als Außenläufer ausgebildet ist. Insbesondere entspricht der Luftspalt einem Abstand zwischen einem Rotor und einem Stator, insbesondere einem Abstand einer Rotor-Innenumfangsfläche und einer Stator-Außenumfangsfläche in der Radialrichtung. Es ist zu verstehen, dass bei einem als Innenläufer ausgebildeten Generator, der Luftspalt dem Abstand zwischen einem Rotor und einem Stator, insbesondere einem Abstand einer Rotor-Außenumfangsfläche und einer Stator-Innenumfangsfläche entspricht. Der Luftspalt wird insbesondere in der Betriebsposition eingestellt.

Eine solche bevorzugte Ausführungsform hat den Vorteil, dass sich einerseits ein kompakter segmentierter Generator herstellen lässt und andererseits eine leichte Montage möglich ist sowie insbesondere Fertigungsungenauigkeiten ausgeglichen werden können.

In dem Betriebszustand der Windenergieanlage ist der segmentierte Generator insbesondere an einer Lagereinheit befestigt. Die Lagereinheit weist einen feststehenden Lagerteil und einen drehenden bzw. drehbaren Lagerteil auf. Das drehbare Lagerteil ist gegenüber dem feststehenden Lagerteil um die Drehachse mittels Lagerelementen, beispielsweise Kugellagern, Wälzlagern, Tonnenlagern oder dergleichen drehbar gelagert. An dem feststehenden Lagerteil ist in dem Betriebszustand der segmentierte Stator befestigt. An dem drehbaren Lagerteil ist in dem Betriebszustand der segmentierte Rotor befestigt. Zur Befestigung des Stators weist die Lagereinheit an dem feststehenden Lagerteil vorzugsweise einen Stator-Grundkörperflansch auf. Zur Befestigung des Rotors weist die Lagereinheit an dem drehbaren Lagerteil vorzugsweise einen Rotor-Grundkörperflansch auf. Es ist zu verstehen, dass die Flanschfläche des Stator-Grundkörperflansches und des Rotor-Grundkörperflansches zueinander insbesondere mit dem Axialabstand beabstandet zueinander angeordnet sind.

Das Rotorsegment erstreckt sich bevorzugt in der Radialrichtung zwischen einem radial innenliegenden Flansch zur Befestigung des Rotorsegments an dem Rotor-Grundkörperflansch einer Lagereinheit und dem radial außenliegenden Magnetträgersegment. Vorzugsweise erstreckt sich das Rotorsegment mit einem Rotor-Tragabschnitt zwischen dem radial innenliegenden Flansch zur Befestigung des Rotorsegments an dem Rotor-Grundkörperflansch der Lagereinheit und dem radial außenliegenden Magnetträgersegment. Es ist zu verstehen, dass das Rotorsegment mehrteilig oder integral ausgebildet sein kann. Insbesondere ist zu verstehen, dass das Rotorsegment integral aus einzelnen miteinander verschweißten Rotorsegmenten ausgebildet sein kann.

Das Statorsegment erstreckt sich bevorzugt in der Radialrichtung zwischen einem radial innenliegenden Flansch zur Befestigung des Statorsegments an einem Stator-Grundkörperflansch der Lagereinheit und einem radial außenliegenden Spulenträgersegment. Insbesondere ist das Statorsegment als Schalenstruktur ausgebildet. Vorzugsweise erstreckt sich das Statorsegment pyramidenstumpfförmig von dem Flansch zu dem radial außenliegenden Spulenträgersegment, wobei der Querschnitt des Statorsegments von dem Flansch zu dem radial außenliegenden Spulenträgersegment zunimmt. Insbesondere bildet das Statorsegment, vorzugsweise integral, einen Stator-Tragabschnitt aus, der sich ausgehend von dem radial innenliegenden Flansch zu dem radial außenliegenden Spulenträgersegment erstreckt.

Eine solches Generatorsegment hat den Vorteil, dass Windenergieanlagen mit Generatoren mit besonders großem Durchmesser und somit einer besonders großen Leistung bereitgestellt werden können.

Ferner lassen sich durch die segmentierte Bauweise Generatoren großen Durchmessers insbesondere kostengünstig herstellen und an dem jeweiligen Aufstellungsort kostengünstig bereitstellen. Diese segmentierte Bauweise ermöglicht auch, dass einzelne Segmente bei Schäden oder für Wartungsarbeiten leicht ersetzt werden können.

Eine solche segmentierte Bauweise hat ferner den Vorteil, dass die Montage des segmentierten Generators an der Gondel bzw. an dem Maschinenträger der Windenergieanlage nach zwei Prinzipien erfolgen kann:
Zum einen können die Generatorsegmente am Boden zu einem ringförmigen, segmentierten Generator an einer Lagereinheit befestigt werden und benachbarte Generatorsegmente miteinander befestigt werden. Anschließend lässt sich der am Boden zusammengebaute segmentierte Generator mit Hilfe eines großen Krans am Maschinenträger der Gondel auf dem Turm montieren. Dies hat den Vorteil, dass der segmentierte Generator weitestgehend am Boden montiert werden kann und lediglich die Befestigung des bereits segmentierten Generators an dem Maschinenträger "in der Luft" erfolgen muss.

Zum anderen können die Generatorsegmente einzeln mit Hilfe eines kleinen Krans zum Maschinenträger angehoben und dort befestigt werden. bei dieser Vorgehensweise werden die Generatorsegmente also sequenziell an dem Maschinenträger der Gondel auf dem Turm befestigt. Anschließend werden die benachbarten Generatorsegmente in Umfangsrichtung miteinander befestigt.

Das erfindungsgemäße Generatorsegment und seine Fortbildungen weisen Merkmale auf, die sie insbesondere dafür geeignet machen für einen erfindungsgemäßen segmentierten Generator und/oder eines der erfindungsgemäßen Verfahren und ihren Fortbildungen verwendet zu werden. Für weitere Vorteile, Ausführungsvarianten und Ausführungsdetails des erfindungsgemäßen Generatorsegments und seine Fortbildungen wird auch auf die zuvor erfolgte Beschreibung zu den entsprechenden Merkmalen und Fortbildungen des segmentierten Generators und die nachfolgende Beschreibung zu den entsprechenden Merkmalen und Fortbildungen der Windenergieanlage und der Verfahren verwiesen.

Der Luftspalt des Generatorsegments entspricht in der Betriebsposition dem Luftspalt in der Transportposition.

Vorzugsweise verändert sich der Luftspalt nicht, wenn das Rotorsegment relativ zu dem Statorsegment verschoben wird. Insbesondere bleibt der Luftspalt beim Verschieben des Rotorsegments relativ zu dem Statorsegment von der Betriebsposition zu der Transportposition und umgekehrt im Wesentlichen, insbesondere in der Radialrichtung, konstant.

Dies hat den Vorteil, dass bereits im Werk der gewünschte Luftspalt für den Betrieb bzw. Betriebszustand der Windenergieanlage eingestellt werden kann und die Einstellung am Aufstellort der Windenergieanlage auf der Baustelle nicht erneut eingestellt werden muss. Insbesondere lässt sich der Luftspalt im Werk unter kontrollierten Bedingungen einstellen. Hierdurch lassen sich Kosten einsparen und der Aufwand bei der Endmontage reduzieren. Nach einer ferner bevorzugten Fortbildung des Generatorsegments weist das Rotorsegment einen oder mehrere erste und/oder zweite Befestigungsanschlüsse auf; wobei vorzugsweise mehrere erste und/oder zweite Befestigungsanschlüsse in einer Umfangsrichtung äquidistant zueinander angeordnet sind; und/oder weist das Statorsegment einen oder mehrere erste und/oder zweite Befestigungsanschlüsse auf; wobei vorzugsweise mehrere erste und/oder zweite Befestigungsanschlüsse in einer Umfangsrichtung äquidistant zueinander angeordnet sind; wobei das Rotorsegment und das Statorsegment bevorzugt über die jeweils ersten und/oder zweiten Befestigungsanschlüsse in der Transportposition miteinander verbunden sind.

Die ersten und/oder zweiten Befestigungsanschlüsse des Rotorsegments und/oder des Statorsegments sind jeweils insbesondere als Befestigungsflächen ausgebildet. Insbesondere sind die Befestigungsflächen gefräst. Vorzugsweise erstrecken sich die jeweiligen Befestigungsflächen der ersten und/oder zweiten Befestigungsanschlüsse des Rotorsegments und/oder des Statorsegments im Wesentlichen orthogonal zu der Drehachse. Es kann auch bevorzugt sein, dass sich die jeweiligen Befestigungsflächen der ersten und/oder zweiten Befestigungsanschlüsse des Rotorsegments und/oder des Statorsegments im Wesentlichen parallel zu der Drehachse erstrecken.

Vorzugsweise sind die ersten Befestigungsanschlüsse des Rotorsegments gegenüber den ersten Befestigungsanschlüssen des Statorsegments um 90° gedreht angeordnet. Insbesondere bilden die ersten Befestigungsanschlüsse des Statorsegments eine Befestigungsfläche aus, die sich im Wesentlichen orthogonal zu der Drehachse erstreckt. Bevorzugt bilden die ersten Befestigungsanschlüsse des Rotorsegments eine Befestigungsfläche aus, die sich im Wesentlichen parallel zu der Drehachse erstreckt. Insbesondere sind die Befestigungsflächen der ersten Befestigungsanschlüsse des Rotorsegments jeweils an einem inneren Umfang des Rotorsegments angeordnet. In dieser Anordnung erstreckt sich eine Flächennormale im Wesentlichen in der Radialrichtung in Richtung der Drehachse.

Ferner ist bevorzugt, dass die zweiten Befestigungsanschlüsse des Rotorsegments gegenüber den zweiten Befestigungsanschlüssen des Statorsegments parallel zueinander angeordnet sind. Insbesondere bilden die zweiten Befestigungsanschlüsse des Rotorsegments und des Statorsegments jeweils eine Befestigungsfläche aus, die sich im Wesentlichen orthogonal zu der Drehachse erstreckt. Vorzugsweise sind jeweils eine Befestigungsfläche der zweiten Befestigungsanschlüsse des Rotorsegments und der zweiten Befestigungsanschlüsse des Statorsegments zueinander gerichtet. Die zueinander gerichteten Befestigungsflächen zweiten Befestigungsanschlüsse des Rotorsegments und des Statorsegments befinden sich in der Transportposition miteinander in Kontakt.

Die ersten und zweiten Befestigungsanschlüsse des Statorsegments, insbesondere dessen Befestigungsflächen, zeigen vorzugsweise in entgegengesetzte Richtungen der Axialrichtung.

Vorzugsweise sind die ersten und/oder zweiten Befestigungsanschlüsse des Rotorsegments und/oder des Statorsegments jeweils mit einem Radialabstand von der Drehachse beabstandet angeordnet. Vorzugsweise ist der Radialabstand der zweiten Befestigungsanschlüsse des Rotorsegments und/oder des Statorsegments im Wesentlichen identisch. Vorzugsweise ist der Radialabstand der ersten Befestigungsanschlüsse des Rotorsegments größer als der Radialabstand der ersten Befestigungsanschlüsse des Statorsegments. Insbesondere sind die Radialabstände der zweiten Befestigungsanschlüsse des Rotorsegments und/oder des Statorsegments größer als der Radialabstand der ersten Befestigungsanschlüsse des Rotorsegments. Es kann bevorzugt sein, dass die Radialabstände der zweiten Befestigungsanschlüsse des Rotorsegments und/oder des Statorsegments größer als der Radialabstand der ersten Befestigungsanschlüsse des Statorsegments und kleiner als der Radialabstand der ersten Befestigungsanschlüsse des Rotorsegments sind.

Insbesondere ist es bevorzugt, dass die ersten und/oder zweiten Befestigungsanschlüsse des Rotorsegments und/oder des Statorsegments Durchgangsbohrungen oder Gewindebohrungen zur Aufnahme von Schraubverbindungen aufweisen. Vorzugsweise weisen die jeweiligen Befestigungsflächen der ersten und/oder zweiten Befestigungsanschlüsse des Rotorsegments und/oder des Statorsegments zwei oder mehr, insbesondere vier, Durchgangsbohrungen oder Gewindebohrungen auf, die sich insbesondere im Wesentlichen orthogonal zu der jeweiligen Befestigungsfläche erstrecken. Vorzugsweise erstrecken sich die Durchgangsbohrungen oder Gewindebohrungen der zweiten Befestigungsanschlüsse des Rotorsegments und/oder des Statorsegments im Wesentlichen parallel zu der Drehachse. Es kann auch bevorzugt sein, dass sich die Durchgangsbohrungen oder Gewindebohrungen der ersten Befestigungsanschlüsse des Statorsegments im Wesentlichen parallel zu der Drehachse erstrecken. Insbesondere ist es bevorzugt, dass die Durchgangsbohrungen oder Gewindebohrungen der ersten Befestigungsanschlüsse des Rotorsegments sich im Wesentlichen orthogonal zu der Drehachse erstrecken.

Insbesondere sind die einen oder mehrere ersten und/oder zweiten Befestigungsanschlüsse des Statorsegments als die eine oder mehreren Kontaktflächen des Statorsegments ausgebildet. Ferner sind bevorzugt die einen oder mehrere erste und/oder zweite Befestigungsanschlüsse des Rotorsegments als die eine oder mehreren Kontaktflächen des Rotorsegments ausgebildet.

Die ersten und/oder zweiten Befestigungsanschlüsse des Rotorsegments und/oder des Statorsegments haben den Vorteil, dass sich die das Rotorsegment und das Statorsegment besonders leicht und mit einer hohen Genauigkeit in der Axialrichtung zwischen der Transportposition und der Betriebsposition anordnen und verschieben lassen.

Insbesondere haben die im Wesentlichen in der Axialrichtung ausgerichteten Durchgangsbohrungen und/oder Gewindebohrungen der zweiten Befestigungsanschlüsse des Rotorsegments und/oder des Statorsegments den Vorteil, dass eine Schraubbewegung einer Schraube in einfacher Weise in eine axiale Relativverschiebung zwischen Rotorsegment und Statorsegment führt.

Ferner haben insbesondere die ersten Befestigungsanschlüsse des Rotorsegments, die gegenüber den ersten Befestigungsanschlüssen des Statorsegments um 90° gedreht angeordneten sind, den Vorteil, dass das Rotorsegment und das Statorsegment bei der Verschiebung von der Betriebsposition in die Transportposition oder umgekehrt, den Luftspalt in radialer Richtung zwischen den Segmenten konstant hält und als radiale Führung dient.

Gemäß einer weiteren bevorzugten Ausführungsform umfasst das Generatorsegment eine Befestigungsvorrichtung zum Fixieren des Rotorsegments an dem Statorsegment in der Transportposition, wobei die Befestigungsvorrichtung vorzugsweise eine erste und zweite Befestigungseinheit umfasst, wobei vorzugsweise die erste Befestigungseinheit von der zweiten Befestigungseinheit verschieden ist; und/oder eine Führungsvorrichtung zum Führen des relativ zueinander verschiebbaren Rotorsegments und Statorsegments entlang der Drehachse von der Betriebsposition in die Transportposition und/oder umgekehrt; wobei die Führungsvorrichtung vorzugsweise eine erste und zweite Führungseinheit umfasst, wobei vorzugsweise die erste Führungseinheit von der zweiten Führungseinheit verschieden ist.

Insbesondere ist die Befestigungsvorrichtung eine lösbare Befestigungsvorrichtung. Die lösbare Befestigungsvorrichtung ist insbesondere im Betriebszustand der Windenergieanlage nicht an dem Generatorsegment bzw. dem segmentierten Generator befestigt.

Die Befestigungsvorrichtung hat den Vorteil, dass das Statorsegment gegenüber dem Rotorsegment in der Transportposition in der Axialrichtung mit einem gewünschten Axialabstand und in der Radialrichtung mit einem gewünschten Luftspalt fixiert werden kann.

Die Führungsvorrichtung hat den Vorteil, dass das Statorsegment und das Rotorsegment relativ zueinander beim Verschieben von der Betriebsposition in die Transportposition und umgekehrt führt. Insbesondere lässt sich mit der Führungsvorrichtung in vorteilhafter Weise der Luftspalt beim Verschieben von der Betriebsposition in die Transportposition und umgekehrt konstant halten.

In einer ferner bevorzugten Ausführungsform des Generatorsegments umfasst die Befestigungsvorrichtung eine Schraubvorrichtung zur Fixierung des Rotorsegments mit dem Statorsegment in der Transportposition; und/oder die erste Befestigungseinheit aufweisend ein Winkelelement mit zwei Befestigungsflächen, jeweils insbesondere aufweisend ein oder mehrere als Durchgangslöcher ausgebildete Langlöcher, und eine Schraubvorrichtung; und/oder die zweite Befestigungseinheit aufweisend eine Schraubvorrichtung; und/oderdie Führungsvorrichtung einen oder mehrere als die erste Führungseinheit ausgebildete Arretierungsbolzen; und/oder die als zweite Führungseinheit ausgebildete erste Befestigungseinheit.

Die Schraubvorrichtungen der ersten und zweiten Befestigungseinheit haben den Vorteil, dass die Befestigungsvorrichtung schnell an dem Generatorsegment bzw. dem segmentierten Generator fixiert und wieder gelöst werden kann. Die Schraubvorrichtung der zweiten Befestigungseinheit hat insbesondere den Vorteil, dass diese das Verschieben des Rotorsegments und des Statorsegments relativ zueinander bewirken und/oder unterstützen kann. Das Winkelelement der ersten Befestigungseinheit hat den Vorteil, dass dieses auch als Führungsvorrichtung dienen kann und insoweit keine separate Führungsvorrichtung vorgesehen werden muss. Ferner können in vorteilhafter Weise die Arretierungsbolzen die Verschiebung des Rotorsegments und des Statorsegments relativ zueinander führen.

Gemäß einem weiteren Aspekt wird die Aufgabe mit einer Windenergieanlage nach Anspruch 6 gelöst. Eine solche Windenergieanlage umfasst einen erfindungsgemäßen segmentierten Generator, insbesondere einen segmentierten Generator nach einer der zuvor beschriebenen Ausführungsformen oder einer Kombination daraus.

Für Vorteile, Ausführungsvarianten und Ausführungsdetails der erfindungsgemäßen Windenergieanlage und seine Fortbildungen wird auf die zuvor erfolgte Beschreibung zu den entsprechenden Merkmalen und Fortbildungen des segmentierten Generators sowie des Generatorsegments und die nachfolgende Beschreibung zu den entsprechenden Merkmalen und Fortbildungen der Verfahren verwiesen.

Gemäß einem weiteren Aspekt löst die Aufgabe ein Verfahren zur Transportvorbereitung eines segmentierten Generators nach Anspruch 7.

Das Verfahren zur Transportvorbereitung eines segmentierten Generators, insbesondere eines permanenterregten segmentierten Drehgenerators, einer Windenergieanlage, der segmentierte Generator aufweisend einen Stator mit zwei oder mehr Statorsegmenten und einen Rotor mit zwei oder mehr Rotorsegmenten, die konzentrisch zu einer Drehachse angeordnet sind; wobei der Rotor und der Stator in einer Betriebsposition mit einem Luftspalt in einer Radialrichtung beabstandet zueinander angeordnet sind und mit einem Axialabstand in einer Axialrichtung beabstandet zueinander angeordnet sind; und wobei jeweils ein Statorsegment der zwei oder mehr Statorsegmente und jeweils ein Rotorsegment der zwei oder mehr Rotorsegmente ein Generatorsegment bilden; das Verfahren gekennzeichnet durch die Schritte: Bereitstellen des segmentierten Generators; und Verschieben des Rotors und des Stators des hergestellten segmentierten Generators in der Betriebsposition relativ zueinander um den Axialabstand entlang der Drehachse des Rotors von der Betriebsposition in eine Transportposition, die von der Betriebsposition verschieden ist.

Gemäß einer bevorzugten Ausführungsform weist der segmentierte Generator eine Lagereinheit aufweist, an der der Rotor und/oder der Stator befestigt sind; das Verfahren umfassend die Schritte: Lösen des Rotors und/oder des Stators von der Lagereinheit.

Gemäß einer ferner bevorzugten Ausführungsform weist der segmentierte Generator auf: eine Befestigungsvorrichtung, wobei die Befestigungsvorrichtung vorzugsweise eine erste und/oder zweite Befestigungseinheit umfasst, wobei vorzugsweise die erste Befestigungseinheit von der zweiten Befestigungseinheit verschieden ist; und/oder eine Führungsvorrichtung, wobei die Führungsvorrichtung vorzugsweise eine erste und/oder zweite Führungsvorrichtung umfasst, wobei vorzugsweise die erste Führungsvorrichtung von der zweiten Führungsvorrichtung verschieden ist; das Verfahren umfassend die Schritte: Fixieren des Rotors und des Stators miteinander mit der Befestigungsvorrichtung in der Transportposition; wobei der Schritt des Fixierens insbesondere einen der folgenden Schritte alleine oder in Kombination umfasst:
- Bereitstellen einer ersten und/oder zweiten Befestigungseinheit; und/oder
- Anordnen der ersten und/oder zweiten Befestigungseinheit an dem Stator; und/oder
- Ausrichten der ersten Befestigungseinheit gegenüber dem Rotor; und/oder
- Befestigen des Rotors und des Stators miteinander mit der ersten und/oder zweiten Befestigungseinheit; und/oder

Führen des Rotors und des Stators relativ zueinander mit einer Führungsvorrichtung während des Schritts des Verschiebens des Rotors und des Stators des hergestellten segmentierten Generators in der Betriebsposition relativ zueinander von der Betriebsposition in die Transportposition und/oder umgekehrt.

Während des Schritts des Verschiebens des Rotors und des Stators des hergestellten segmentierten Generators in der Betriebsposition relativ zueinander um den Axialabstand entlang der Drehachse des Rotors von der Betriebsposition in eine Transportposition und/oder umgekehrt bleibt der Luftspalt in der Radialrichtung im Wesentlichen konstant.

Nach einer ferner bevorzugten Fortbildung umfasst das Verfahren zur Transportvorbereitung eines segmentierten Generators einer Windenergieanlage den Schritt: Aufteilen des segmentierten Generators in zwei oder mehr Generatorsegmente.

Gemäß einem weiteren Aspekt wird die Aufgabe durch ein Verfahren zum Transport eines segmentierten Generators einer Windenergieanlage nach Anspruch 11 gelöst.

Das Verfahren zum Transport eines segmentierten Generators, insbesondere eines permanenterregten segmentierten Drehgenerators, einer Windenergieanlage, umfassend Bereitstellen eines in zwei oder mehr Generatorsegmente aufgeteilten segmentierten Generators nach dem vorhergehenden Anspruch 10 für den Transport; und/oder Anordnen und Befestigen eines Generatorsegments der bereitgestellten zwei oder mehr Generatorsegmente des aufgeteilten segmentierten Generators auf einer Transportvorrichtung; und/oder Transportieren des auf der Transportvorrichtung angeordneten und befestigten Generatorsegments mit der Transportvorrichtung.

Gemäß einem weiteren Aspekt wird die Aufgabe durch ein Verfahren zur Montage eines segmentierten Generators einer Windenergieanlage nach Anspruch 12 gelöst.

Das Verfahren zur Montage eines segmentierten Generators, insbesondere eines permanenterregten segmentierten Drehgenerators, einer Windenergieanlage, umfassend Bereitstellen der zwei oder mehr Generatorsegmente des aufgeteilten segmentierten Generators nach Anspruch 5; und/oder Anordnen der bereitgestellten zwei oder mehr Generatorsegmente des segmentierten Generators zu einem segmentierten Generator in der Transportposition; und/oder Befestigen benachbarter Generatorsegmente der zu einem segmentierten Generator ringförmig angeordneten zwei oder mehr Generatorsegmente; und/oder Befestigen der bereitgestellten zwei oder mehr Generatorsegmente des aufgeteilten segmentierten Generators an einer Lagereinheit.

In einer bevorzugten Ausführungsform des Verfahrens zur Montage eines segmentierten Generators einer Windenergieanlage umfasst der Schritt des Befestigens der bereitgestellten zwei oder mehr Generatorsegmente des aufgeteilten segmentierten Generators an der Lagereinheit einen der folgenden Schritte alleine oder in Kombination umfasst: Ausrichten der Lagereinheit radial an dem Stator; und/oder Befestigen der Lagereinheit, insbesondere eines Statorträgers der Lagereinheit, an dem Stator; und/oder Lösen der Befestigungsvorrichtung von dem Rotor und dem Stator in der Transportposition; und/oder Aufschieben des Rotors auf die Lagereinheit, insbesondere auf einen Rotorträger der Lagereinheit; wobei die Lagereinheit insbesondere als Führungsvorrichtung für den Rotor dient; und/oder Verschieben des Rotors gegenüber dem Stator relativ zueinander um den Axialabstand entlang der Drehachse des Rotors von der Transportposition in die Betriebsposition; und/oder Befestigen der Lagereinheit, insbesondere eines Rotorträgers der Lagereinheit, an dem Rotor.

Gemäß einem weiteren Aspekt löst die Aufgabe ein Verfahren zur Montage einer Windenergieanlage nach Anspruch 14.

Das Verfahren zur Montage einer Windenergieanlage umfassend: Bereitstellen eines Turms einer Windenergieanlage in einem Einbauzustand mit einer darauf angeordneten Gondel mit Maschinenträger; und Bereitstellen der zwei oder mehr Generatorsegmente des aufgeteilten segmentierten Generators nach Anspruch 10; und/oder Befestigen, insbesondere sequenzielles Befestigen, der bereitgestellten zwei oder mehr Generatorsegmente des aufgeteilten segmentierten Generators an dem Maschinenträger zu einem segmentierten Generator; und/oder Bereitstellen einer Lagereinheit; und/oder Befestigen der Lagereinheit an dem Maschinenträger der Gondel und/oder den zwei oder mehreren Generatorsegmenten, insbesondere an einem segmentierten Stator des segmentierten Ge nerators; und/oder Verschieben eines segmentierten Rotors des segmentierten Generators relativ zu dem segmentierten Stator des segmentierten Generators von einer Transportposition in eine Betriebsposition um den Axialabstand entlang einer Drehachse, wobei die Betriebsposition von der Transportposition verschieden ist; und/oder Befestigen des segmentierten Rotors an der Lagereinheit in der Betriebsposition; und/oder Drehen des an der Lagereinheit befestigten segmentierten Rotors, und/oder Befestigen in einer Umfangsrichtung benachbarter Generatorsegmente miteinander zu dem segmentierten Generator, insbesondere Befestigen der in der Umfangsrichtung benachbart angeordneten Rotorsegmente zu einem segmentierten Rotor. Die Schritte des Drehens des an der Lagereinheit befestigten segmentierten Rotors und des Befestigens in einer Umfangsrichtung benachbarter Generatorsegmente miteinander zu dem segmentierten Generator erfolgt vorzugsweise iterativ. Insbesondere entspricht die Anzahl der Iterationen der beiden genannten Verfahrensschritte Drehen und Befestigen der Anzahl der Generatorsegmente, die der zu montierende segmentierte Generator aufweist.

Ein solches Verfahren hat insbesondere den Vorteil, dass der segmentierte Rotor nach Befestigung an der Lagereinheit gedreht werden kann, so dass die miteinander zu verbindenden Trennschnittstellen benachbarter Generatorsegmente oberhalb einer Gondel der Windenergieanlage ausgerichtet sind. Hierdurch können die Trennschnittstellen bzw. die an den Trennschnittstellen der Generatorsegmente angeordneten Flanschanschlüsse ausgehend von der Gondel sicher erreicht und die benachbarten Generatorsegmente, insbesondere mit Schrauben oder dergleichen, miteinander befestigt werden. Dies ermöglicht eine Endmontage des Generators auf dem Turm mit einer höheren Arbeitssicherheit. Insbesondere besteht dieser Vorteil bei Außenläufern, da bei diesen die Flanschanschlüsse einfach und bequem erreicht werden können. Bei Innenläufern ist der Stator hingegen nicht drehbar, so dass die Flanschanschlüsse des Stators schwieriger zu erreichen und insofern nur mit einem höheren Aufwand zu miteinander zu befestigen sind.

Die erfindungsgemäßen Verfahren und ihre möglichen Fortbildungen weisen Merkmale bzw. Verfahrensschritte auf, die sie insbesondere dafür geeignet machen für einen erfindungsgemäßen segmentierten Generator und/oder ein erfindungsgemäßes Generatorsegment und/oder eine erfindungsgemäße Windenergieanlage sowie die jeweiligen Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Generatorsegments und des segmentierten Generators und der Windenergieanlage verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage in einem Betriebszustand;
- Fig. 2:: eine schematische, zweidimensionale Schnittansicht einer beispielhaften Ausführungsform eines Generatorsegments in der Betriebsposition;
- Fig. 3:: eine schematische, zweidimensionale Ansicht der in Fig. 2 beispielhaften Ausführungsform eines Generatorsegments in der Transportposition;
- Fig. 4a, b:: eine zweidimensionale Ansicht einer weiteren beispielhaften Ausführungsform eines Generatorsegments in der Betriebsposition;
- Fig. 5a, b:: eine zweidimensionale Ansicht der in Fig. 4a,b beispielhaften Ausführungsform eines Generatorsegments in der Transportposition;
- Fig. 6:: eine zweidimensionale Ansicht einer bevorzugten Ausführungsform eines Statorsegments eines Generatorsegments;
- Fig. 7:: eine dreidimensionale Ansicht eines Generatorsegments eines segmentierten Generators gemäß der in den Figuren 4a bis 5b ausschnittsweise dargestellten bevorzugten Ausführungsform;
- Fig. 8:: eine dreidimensionale Detailansicht einer möglichen Ausführungsform des in Figur 7 dargestellten Flanschanschluss an einer ersten Trennschnittstelle eines Generatorsegments;
- Fig. 9:: eine dreidimensionale Ansicht eines Generatorsegments eines segmentierten Generators in einer weiteren bevorzugten Ausführungsform;
- Fig. 10:: eine dreidimensionale Ansicht der in den Figuren 4a bis 5b ausschnittsweise dargestellten bevorzugten Ausführungsform;
- Fig. 11 a,b:: eine dreidimensionale Ansicht eines Generatorsegments eines segmentierten Generators in einer weiteren bevorzugten Ausführungsform;
- Fig. 12:: ein schematisches Ablaufdiagramm, das exemplarisch Schritte einer bevorzugten Ausführungsform eines Verfahrens zur Transportvorbereitung eines segmentierten Generators einer Windenergieanlage zeigt;
- Fig. 13:: ein schematisches Ablaufdiagramm, das exemplarisch Schritte einer bevorzugten Ausführungsform eines Verfahrens zum Transport eines segmentierten Generators einer Windenergieanlage zeigt;
- Fig. 14:: eine dreidimensionale Ansicht eines für den Transport auf einer Transportvorrichtung angeordneten aufgeteilten Generatorsegments;
- Fig. 15:: ein schematisches Ablaufdiagramm, das exemplarisch Schritte einer bevorzugten Ausführungsform eines Verfahrens zur Montage eines segmentierten Generators einer Windenergieanlage zeigt;
- Fig. 16:: ein schematisches Ablaufdiagramm, das exemplarisch Schritte einer bevorzugten Ausführungsform eines Verfahrens zur Montage einer Windenergieanlage zeigt;
- Fig. 17:: eine dreidimensionale Ansicht eines einzelnen an einem Maschinenträger einer Gondel montierten Generatorsegments;
- Fig. 18a, b:: eine dreidimensionale Ansicht gemäß Figur 14 mit einem zweiten an dem Maschinenträger der Gondel montierten Generatorsegment in einer Vorder- und Hinteransicht; und
- Fig. 19:: eine dreidimensionale Ansicht gemäß Figur 15a,b mit einer montierten Lagereinheit.

In den Figuren sind gleiche oder im Wesentlichen funktionsgleiche bzw. -ähnliche Elemente mit den gleichen Bezugszeichen bezeichnet. Sofern in der vorliegenden Figurenbeschreibung allgemein Bezug zu einem Generator, Rotor oder Stator genommen wird ist davon prinzipiell ein segmentierter Generator, segmentierte Rotor oder segmentierter Stator umfasst, sofern dies nicht ausdrücklich anders beschrieben ist.

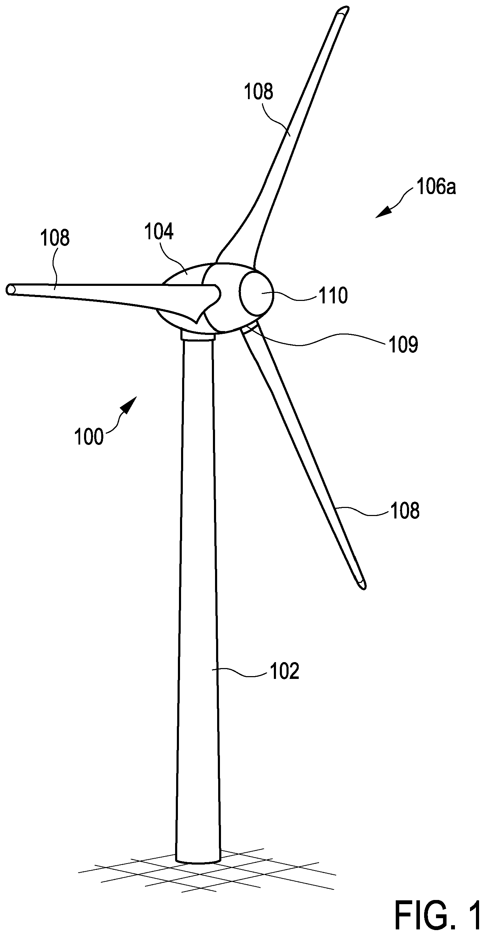

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106a mit drei Rotorblättern 108 und einem Spinner 110 angeordnet. Der aerodynamische Rotor 106a wird im Betrieb durch den Wind in eine Drehbewegung versetzt und treibt dadurch einen Generator 1, insbesondere einen Rotor 106 des Generators 1, an. Der Generator 1 ist insbesondere außerhalb der Gondel 104 angeordnet. Der Turm 102 weist insbesondere Windenergieanlagen-Stahlturmringsegmente mit Flanschsegmenten auf. Dadurch wird der Turm 102 mittels einfach zu transportierender Bauteile aufgebaut, die darüber hinaus mit hoher Präzision und geringem Aufwand verbunden werden können.

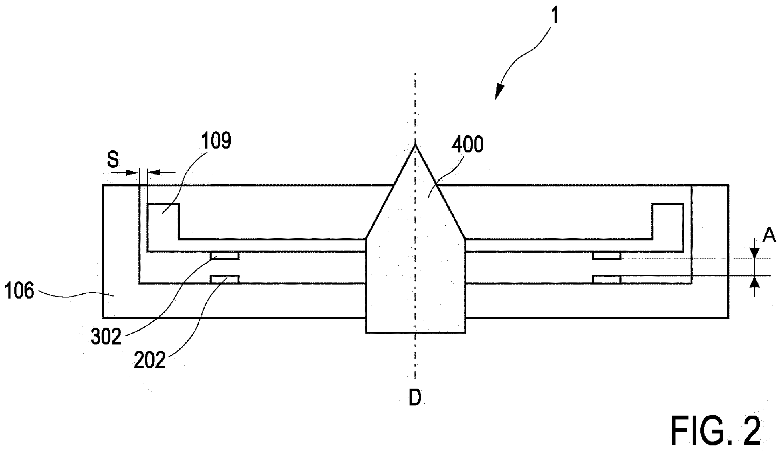

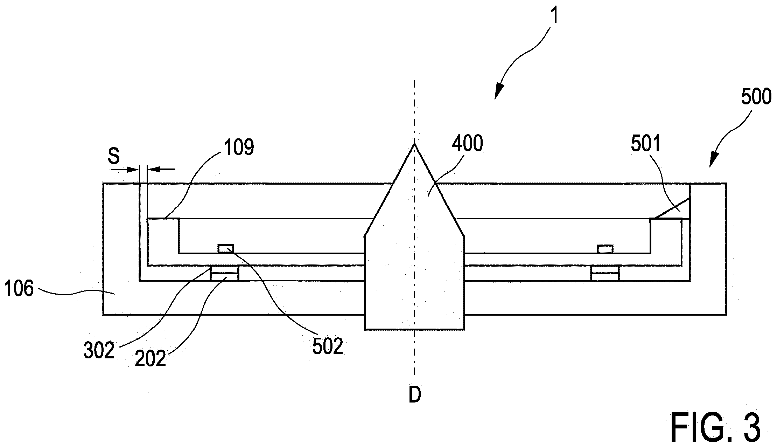

Figuren 2 und 3 zeigen eine schematische, zweidimensionale Schnittansicht einer beispielhaften Ausführungsform eines segmentierten Generators 1 in der Betriebsposition, siehe (Figur 2) und der Transportposition (Figur 3). Der segmentierte Generator 1 weist einen segmentierten Rotor 106 und einen segmentierten Stator 109 auf, die an einer Lagereinheit 400 befestigt sind. Sowohl der Rotor 106 als auch der Stator 109 sind ringförmig ausgebildet und konzentrisch zu einer Drehachse D ausgerichtet. Der Rotor 106 ist gegenüber dem Stator 109 mittels der Lagereinheit 400 drehbar um die Drehachse D gelagert.

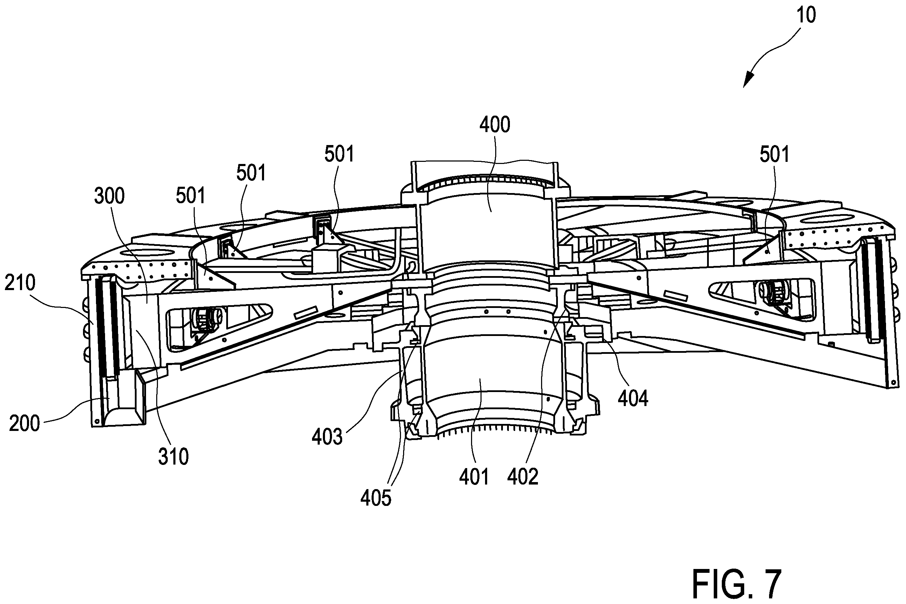

Hierzu weist die Lagereinheit 400 einen feststehenden Lagerteil 401 und einen drehenden bzw. drehbaren Lagerteil 403 auf. Das drehbare Lagerteil 403 ist gegenüber dem feststehenden Lagerteil 401 um die Drehachse D mittels Lagerelementen 405, beispielsweise Kugellagern, Wälzlagern, Tonnenlagern oder dergleichen drehbar gelagert. An dem feststehenden Lagerteil 401 wird der Stator 109 befestigt. An dem drehbaren Lagerteil 403 wird der Rotor 106 befestigt. Zur Befestigung des Stators 109 weist die Lagereinheit 400 an dem feststehenden Lagerteil 401 vorzugsweise einen Stator-Grundkörperflansch 402 auf. Zur Befestigung des Rotors 106 weist die Lagereinheit 400 an dem drehbaren Lagerteil 403 vorzugsweise einen Rotor-Grundkörperflansch 404 auf. Die Details der Lagereinheit 400 und der Befestigung des Rotors 106 und des Stators 109 an der Lagereinheit 400 sind beispielsweise Figur 7 zu entnehmen.

Der Stator 109 ist innerhalb des Rotors 106 angeordnet. In dieser bevorzugten Ausführung umschließt der Rotor mit einer Rotor-Innenumfangsfläche eine Stator-Außenumfangsfläche des Stators 109 vollständig. Diese in den Figuren 2 und 3 dargestellte bevorzugte Ausführungsform des segmentierten Generators ist auch als Außenläufer bekannt.

Der Stator 109 ist innerhalb des Rotors 106 in einer radialen Richtung, orthogonal zu der Drehachse D, mit einem Luftspalt S beabstandet angeordnet. Der Luftspalt S ist ein in einer Umfangsrichtung, tangential zu der Drehachse, umlaufender Luftspalt zwischen Rotor 106 und Stator 109. Insbesondere entspricht der Luftspalt S dem Abstand zwischen der Rotor-Innenumfangsfläche des Rotors 106 und der Stator-Außenumfangsfläche des Stators 109, insbesondere in der Radialrichtung. Der gewünschte Luftspalt wird in der Betriebsposition eingestellt. Der Luftspalt in der Transportposition entspricht dem Luftspalt in der Betriebsposition. Insbesondere ändert sich der Luftspalt S bei der Verschiebung des Rotors 106 relativ zu dem Stator 109 von der Betriebsposition und umgekehrt nicht.

In der in Figur 2 dargestellten Betriebsposition des segmentierten Generators 1 sind der Rotor 106 und der Stator 109 mit einem Axialabstand A entlang der Drehachse D in einer Axialrichtung voneinander beabstandet. Vorzugsweise beträgt der Axialabstand nicht mehr als 20 mm. Werden der Rotor 106 und der Stator 109 um den Axialabstand A entlang der Drehachse D von der Betriebsposition in die Transportposition verschoben nimmt der Axialabstand A ab. Der Axialabstand A nimmt bis auf 0 mm ab, sobald der Rotor 106 und der Stator 109 miteinander in Kontakt stehen. Diese Anordnung zeigt Figur 3 schematisch.

Der Rotor 106 und der Stator 109 der in den Figuren 2 und 3 schematisch dargestellten bevorzugten Ausführungsform des segmentierten Generators 1 umfassen jeweils erste Befestigungsanschlüsse 201, 301 (nicht dargestellt) und zweite Befestigungsanschlüsse 202, 302. Die ersten und zweiten Befestigungsanschlüsse 201, 301, 202, 302 sind jeweils als Befestigungsflächen ausgebildet. Die Befestigungsflächen der ersten Befestigungsanschlüsse 201 des Rotors 106 erstrecken sich im Wesentlichen parallel zu der Drehachse D und die Befestigungsflächen der ersten Befestigungsanschlüsse 301 des Stators 109 erstrecken sich im Wesentlichen orthogonal zu der Drehachse D. Insofern sind die Befestigungsflächen der ersten Befestigungsanschlüsse 201, 301 des Rotors 106 und des Stators 109 orthogonal zu der Drehachse im Wesentlichen um 90° gedreht zueinander angeordnet. Die Flächennormale der Befestigungsfläche der ersten Befestigungsanschlüsse erstreckt sich im Wesentlichen in der Radialrichtung in Richtung der Drehachse. Die Befestigungsflächen der zweiten Befestigungsanschlüsse des Rotors 106 und des Stators 109 erstrecken sich im Wesentlichen orthogonal zu der Drehachse D. Die Befestigungsflächen der zweiten Befestigungsanschlüsse des Rotors 106 und des Stators 109 sind zueinander gerichtet. Die Flächennormalen der Befestigungsflächen der zweiten Befestigungsanschlüsse des Rotors 106 und des Stators 109 erstrecken sich im Wesentlichen parallel zu der Drehachse D.

In der in Figur 3 dargestellten Transportposition des segmentierten Generators 1 ist eine erste Befestigungseinheit 501 und eine zweite Befestigungseinheit 502 einer Befestigungsvorrichtung 500 dargestellt. Die zweite Befestigungseinheit 502 weist eine Schraubvorrichtung auf, mit der sich der Rotor 106 gegenüber dem Stator 109 in der Transportposition fixieren lässt. Es ist zu verstehen, dass die zweite Befestigungseinheit 502 insbesondere zur Fixierung des Rotors an dem Stator in der Axialrichtung wirkt. Die erste Befestigungseinheit 501 weist im Unterschied zu der zweiten Befestigungseinheit 502 ergänzend ein Winkelelement mit zwei Befestigungsflächen auf. Das Winkelelement der ersten Befestigungseinheit 501 wird an die ersten Befestigungsanschlüsse 201, 301 des Rotors 106 und des Stators 109 angeordnet. Die erste Befestigungseinheit 501 dient insbesondere dazu, den Stator gegenüber dem Rotor in der Transportposition in radialer Richtung, orthogonal zu der Drehachse D zu fixieren.

Es ist allerdings zu verstehen, dass die erste Befestigungseinheit 501 auch als eine zweite Führungseinheit 602 einer Führungsvorrichtung 600 ausgebildet sein kann. Die Führungsvorrichtung 600 ist zum Führen des relativ zueinander verschiebbaren Rotors 106 und Stators 109 entlang der Drehachse D von der Betriebsposition in die Transportposition und umgekehrt ausgebildet. Hierzu werden die Winkelelemente der ersten Befestigungseinheiten 501 zunächst an den ersten Befestigungsanschlüssen 301 des Stators 109 angeordnet. Anschließend werden die Winkelelemente in radialer Richtung nach außen bis an die ersten Befestigungsanschlüsse 201 des Rotors 106 verschoben, so dass der Winkel plan an dem ersten Befestigungsanschluss 201 des Rotors 106 anliegt und ausgerichtet sind. In dieser Anordnung werden die Winkelelemente an den ersten Befestigungsanschlüssen 301 des Stators 109 mit einer Schraubvorrichtung befestigt. Hierdurch verändert sich der Luftspalt S auch bei einer Verschiebung des Rotors 106 relativ zu dem Stator 109 zwischen der Betriebsposition und der Transportposition - wie im Werk ursprünglich eingestellt - nicht. In der Transportposition können dann auch die Winkelelemente mit den ersten Befestigungsanschlüssen 201 des Rotors 106 für den Transport verschraubt werden.

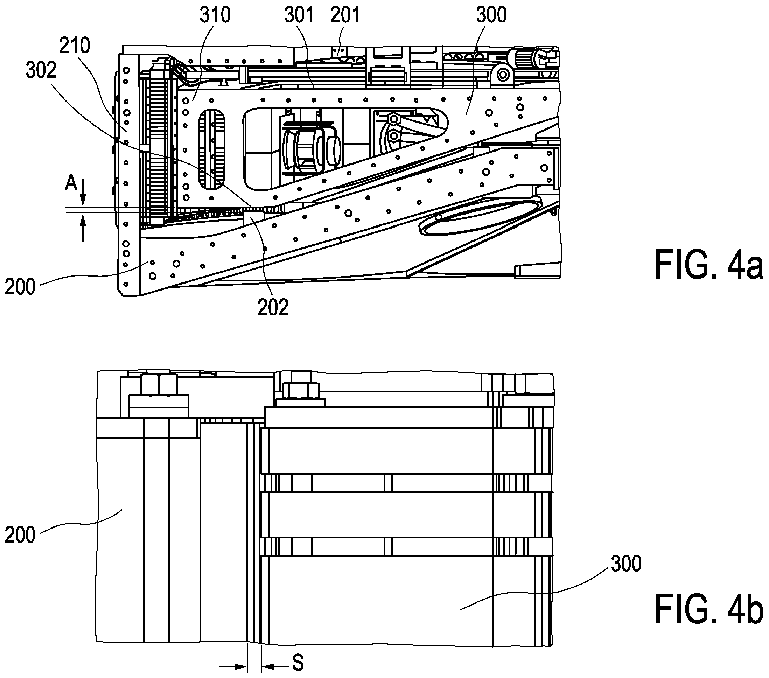

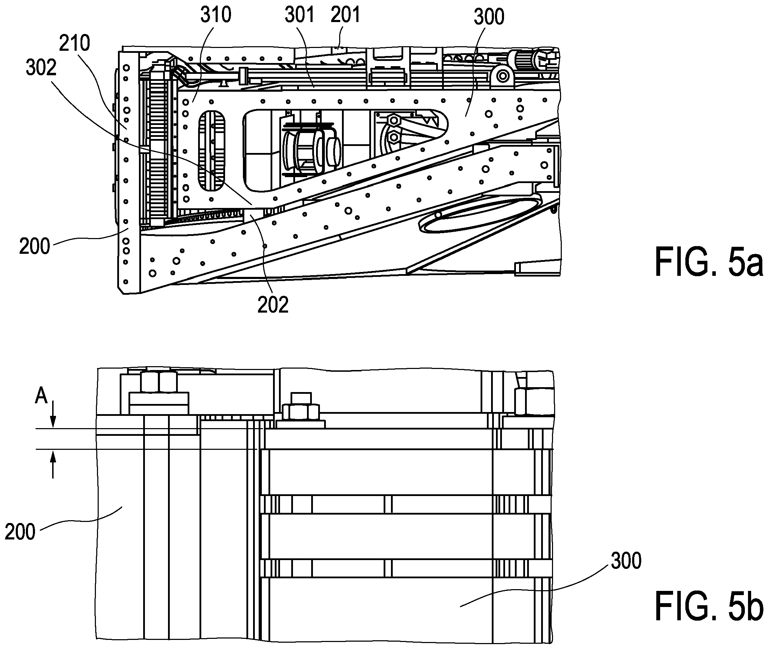

Die ersten und zweiten Befestigungsanschlüsse des Rotorsegments und des Statorsegments sind jeweils mit einem Radialabstand von der Drehachse beabstandet angeordnet. In dieser bevorzugten Ausführungsform des segmentierten Generators sind die Radialabstände der zweiten Befestigungsanschlüsse des Rotorsegments und des Statorsegments größer als der Radialabstand der ersten Befestigungsanschlüsse des Rotorsegments. Ferner ist der Radialabstand der ersten Befestigungsanschlüsse des Rotorsegments größer als der Radialabstand der ersten Befestigungsanschlüsse des Statorsegments. Insbesondere sind die Radialabstände der zweiten Befestigungsanschlüsse des Rotor- und Statorsegments gleich. Figuren 4a und 5a zeigen eine schematische Teilseitenansicht einer bevorzugten Ausführungsform eines Generatorsegments 10 eines segmentierten Generators 1. Das in den Figuren 4a bis 5b dargestellte Generatorsegment 10 weist ein Rotorsegment 200 und ein Statorsegment 300 auf.

In Figur 4a ist das Generatorsegment 10 in der Betriebsposition dargestellt. Figur 5a zeigt das Generatorsegment 10 in der Transportposition. In den Figuren 4b und 5b ist eine Detailansicht des Luftspalts S und des Axialabstands A zwischen dem Rotorsegment 200 und dem Statorsegment 300 der in den Figuren 4a und 4b dargestellten Ausführungsform in der jeweiligen Position dargestellt. Insbesondere die Detailansichten in den Figuren 4b und 5b verdeutlichen, dass der Luftspalt S in der in Figur 4b dargestellten Betriebsposition des Generatorsegments und der in Figur 5b dargestellten Transportposition gleich ist.

In dieser bevorzugten Ausführungsform erstreckt sich das ringförmig ausgebildete Rotorsegment 200 in der Radialrichtung zwischen einem radial innenliegenden Flansch zur Befestigung des Rotorsegments an einem Rotor-Grundkörperflansch 404 einer Lagereinheit 400 und einem radial außenliegenden Magnetträgersegment 210. An dem Magnetträgersegment 210 ist das mindestens eine Rotor-Blechpaket angeordnet. Vorzugsweise sind das Magnetträgersegment 210 und das mindestens eine Rotor-Blechpaket miteinander verschweißt. An dem mindestens einen Rotor-Blechpaket ist wiederum mindestens eine Magneteinheit angeordnet. Die mindestens eine Magneteinheit ist insbesondere stoffschlüssig mit dem Rotor-Blechpaket verbunden. Vorzugsweise verbindet eine Vergussmasse, die die Magneteinheit zumindest teilweise umschließt, die Magneteinheit mit dem Rotor-Blechpaket. In der hier dargestellten bevorzugten Ausführungsform bildet die mindestens eine Magneteinheit eine Rotor-Innenumfangsfläche.

In dieser bevorzugten Ausführungsform weist das ringförmig ausgebildete Statorsegment 300 einen Spulenträgersegment 310, ein Stator-Blechpaket, eine Stator-Befestigungsvorrichtung und mindestens eine Spuleneinheit auf. Das Statorsegment erstreckt sich bevorzugt in der Radialrichtung zwischen einem radial innenliegenden Flansch zur Befestigung des Statorsegments an dem Stator-Grundkörperflansch 402 einer Lagereinheit 400 und einem radial außenliegenden Spulenträgersegment 310. In der vorliegenden bevorzugten Ausführungsform ist das Statorsegment 300 als Schalenstruktur ausgebildet, die sich pyramidenstumpfförmig von dem Flansch zu dem Spulenträgersegment 310 erstreckt, wobei der Querschnitt des Statorsegments 300 von dem Flansch zu dem Statorsegment zunimmt. Das mindestens eine Stator-Blechpaket ist an dem Spulenträgersegment 310 angeordnet. An dem mindestens einen Stator-Blechpaket ist wiederum mindestens eine Spuleneinheit angeordnet. In der hier dargestellten bevorzugten Ausführungsform bilden das mindestens eine Stator-Blechpaket und/oder die mindestens eine Spuleneinheit eine Stator-Außenumfangsfläche.

Es ist zu sehen, dass die in den Figuren 4a bis 5b dargestellte Ausführungsform des Generatorsegments 10 erste und zweite Befestigungsanschlüsse 201, 202, 301, 302 an dem Rotorsegment 200 und dem Statorsegment 300 aufweist.

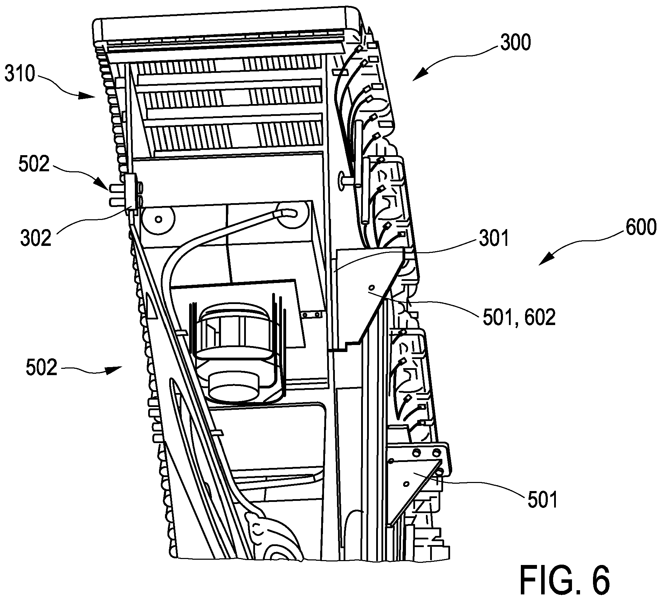

In Figur 6 ist ein Statorsegment 300 basierend auf der in den Figuren 4a bis 5b dargestellten Ausführungsform dargestellt. Ergänzend umfasst das in Figur 6 dargestellte Statorsegment 300 eine Befestigungsvorrichtung 500, mit der das Statorsegment 300 und das Rotorsegment 200 lösbar aneinander befestigt werden können. Die Befestigungsvorrichtung 500 umfasst eine erste Befestigungseinheit 501 mit einem Winkelelement mit zwei Befestigungsflächen und einer Schraubvorrichtung, welche an dem ersten Befestigungsanschluss 301 des Statorsegments 300 befestigt ist. Ferner weist die Befestigungsvorrichtung 500 eine zweite Befestigungseinheit 502 mit einer Schraubvorrichtung auf, welche an den zweiten Befestigungsanschlüssen 302 des Statorsegments 300 angeordnet sind.

In Figur 7 ist ein Generatorsegment 10 eines segmentierten Generators 1 gemäß der in den Figuren 4a bis 5b ausschnittsweise dargestellten bevorzugten Ausführungsform eines Generatorsegments 10 gezeigt. Das Generatorsegment 10 erstreckt sich im Wesentlichen orthogonal zu der Umfangsrichtung zwischen einer ersten und zweiten Trennschnittstelle. Die erste und zweite Trennschnittstelle definieren eine erste und zweite Trennschnittstellenebene, innerhalb derer sich die Drehachse D erstreckt. Die erste und zweite Trennschnittstelle des Generatorsegments weist eine Verbindungsvorrichtung auf, die dazu ausgebildet ist, benachbarte Generatorsegmente, die zu einem segmentierten Generator angeordnet werden, miteinander zu verbinden. In der bevorzugten Ausführungsform ist die Verbindungsvorrichtung der ersten und zweiten Trennschnittstelle dazu ausgebildet, benachbarte Generatorsegmente mechanisch zu verbinden. Hierzu weisen die erste und zweite Trennschnittstelle einen Flanschanschluss und eine Schraubverbindung als Verbindungsvorrichtung auf. Die Ausführungen zu dem Generatorsegment können entsprechend für ein Rotorsegment eines segmentierten Rotors und/oder ein Statorsegment eines segmentierten Stators gelten.

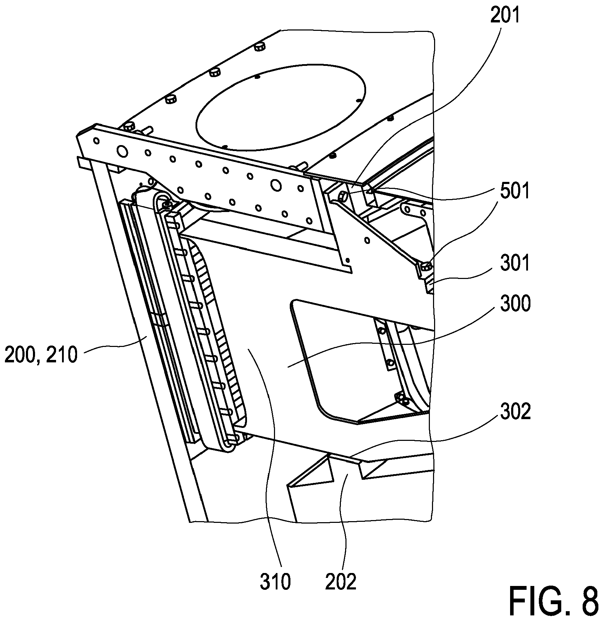

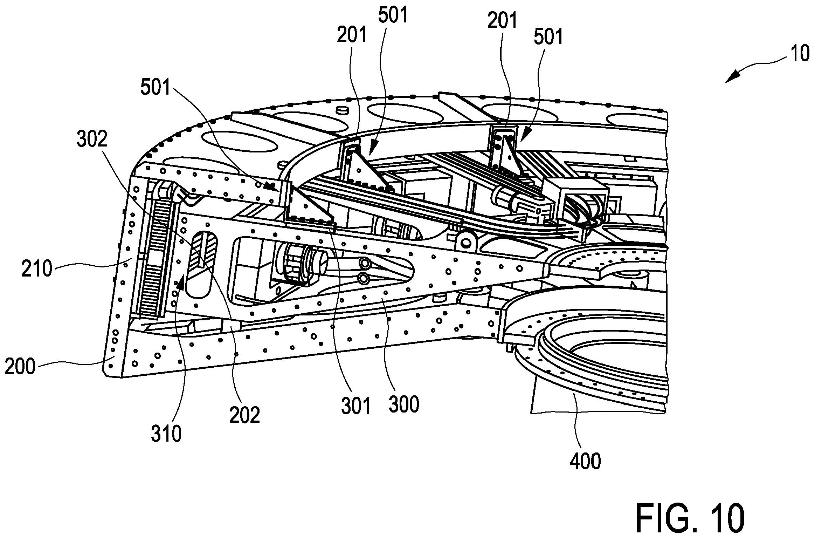

Figur 8 ist eine Detailansicht einer möglichen Ausführungsform des in Figur 7 dargestellten Flanschanschluss an der ersten Trennschnittstelle. Die Figuren 4a, 5a und 10 zeigen eine weitere bevorzugte Ausführungsform eines Flanschanschlusses an der ersten und zweiten Trennschnittstelle.

Es ist zu verstehen, dass an der ersten und zweiten Trennschnittstelle die erste Befestigungseinheit 501, insbesondere das Winkelelement, als halbes Winkelelement ausgebildet ist. Eine entsprechend als halbes Winkelelement ausgebildete Befestigungseinheit 501 zeigen beispielsweise Figuren 6 bis 8.

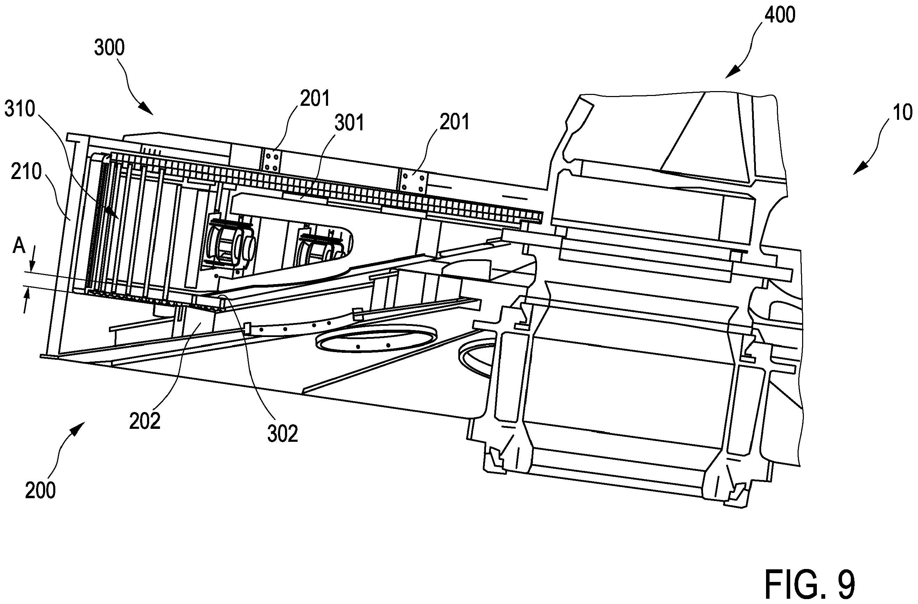

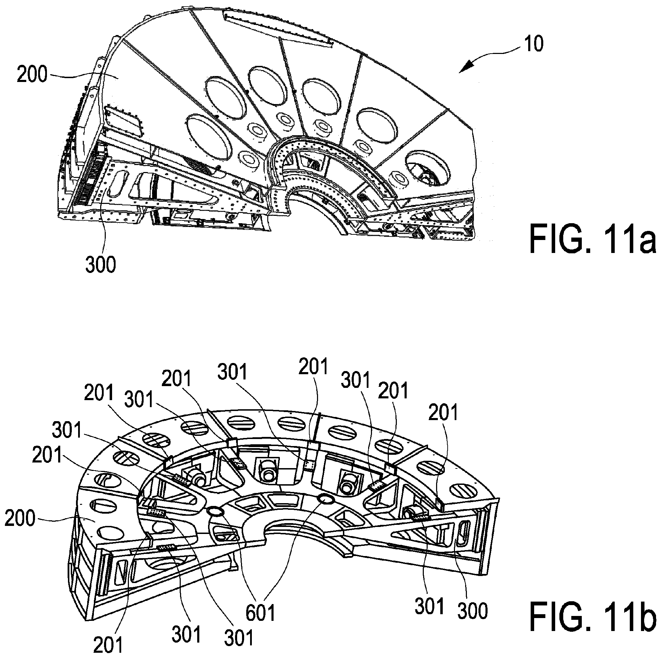

Die Figuren 9 und 11 zeigen jeweils eine dreidimensionale Ansicht eines Generatorsegments eines segmentierten Generators in einer weiteren bevorzugten Ausführungsform.

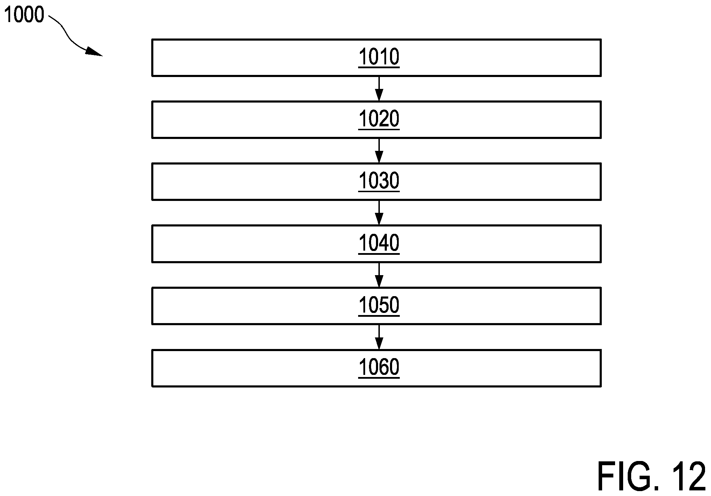

Figur 12 ist ein schematisches Ablaufdiagramm, das exemplarisch Schritte einer bevorzugten Ausführungsform eines Verfahrens 1000 zur Transportvorbereitung eines segmentierten Generators einer Windenergieanlage zeigt.

Das Verfahren 1000 zur Transportvorbereitung eines segmentierten Generators 1 einer Windenergieanlage 100, umfasst ein Bereitstellen 1010 eines segmentierten Generators 1, wie dies beispielsweise zuvor beschrieben wurde, und ein Verschieben 1020 des Rotors 106 und des Stators 109 des hergestellten segmentierten Generators 1 in der Betriebsposition relativ zueinander um den Axialabstand A entlang der Drehachse D des Rotors 106 von der Betriebsposition in die Transportposition, die von der Betriebsposition verschieden ist. Anschließend folgt ein Lösen 1030 des Rotors 106 von der Lagereinheit 400 und der Rotor 106 und der Stator 109 miteinander mit der Befestigungsvorrichtung 500 in der Transportposition fixiert 1040. Vorzugsweise umfasst der Schritt des Fixierens insbesondere ein Bereitstellen einer ersten und zweiten Befestigungseinheit 501, 502, ein Anordnen der ersten und zweiten Befestigungseinheit 501, 502 an dem Stator, ein Ausrichten der ersten Befestigungseinheit 501 gegenüber dem Rotor und ein Befestigen des Rotors 106 und des Stators 109 miteinander mit der ersten und zweiten Befestigungseinheit 501, 502. Ferner ist es bevorzugt, dass der Rotors 106 und der Stator 109 relativ zueinander mit einer Führungsvorrichtung 600 während des Schritts des Verschiebens des Rotors 106 und des Stators 109 des hergestellten segmentierten Generators 1 in der Betriebsposition relativ zueinander von der Betriebsposition in die Transportposition und/oder umgekehrt geführt 1050 werden. Es ist zu verstehen, dass während des Schritts des Verschiebens des Rotors 106 und des Stators 109 des hergestellten segmentierten Generators 1 in der Betriebsposition relativ zueinander um den Axialabstand A entlang der Drehachse D des Rotors 106 von der Betriebsposition in eine Transportposition (und umgekehrt) der Luftspalt S in der Radialrichtung im Wesentlichen konstant bleibt. Anschließend wird der segmentierte Generator 1 in zwei oder mehr Generatorsegmente 10 aufgeteilt 1060.

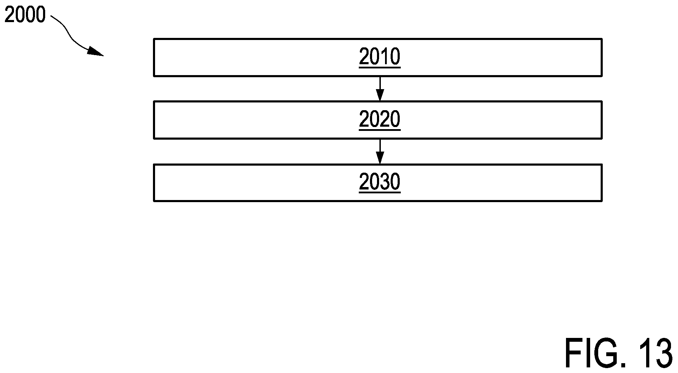

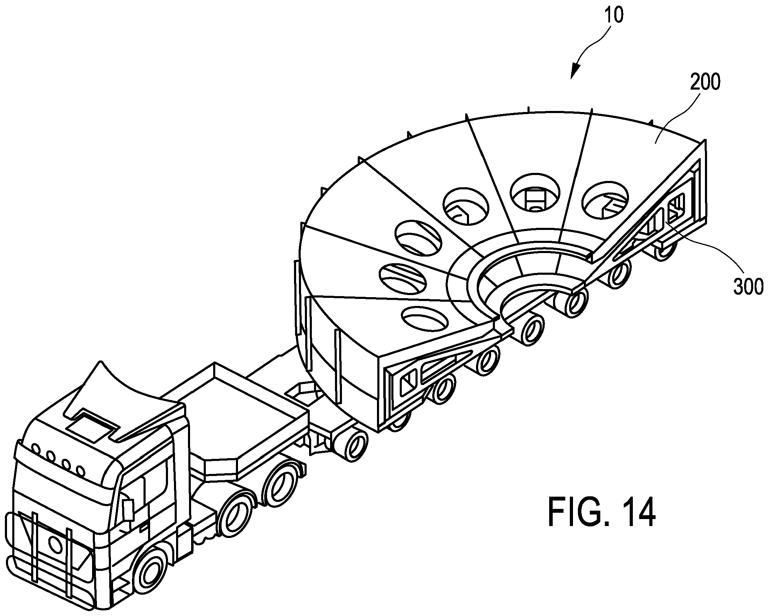

Figur 13 ist ein schematisches Ablaufdiagramm, das exemplarisch Schritte einer bevorzugten Ausführungsform eines Verfahrens 2000 zum Transport eines segmentierten Generators einer Windenergieanlage zeigt. Figur 14 zeigt ein gemäß dem zuvor beschriebenen Verfahren zur Transportvorbereitung vorbereitetes Generatorsegment, welches auf einer Transportvorrichtung, einem Lastkraftwagen, für den Transport vom Werk zum Aufstellungsort angeordnet ist.

Das Verfahren 2000 zum Transport eines segmentierten Generators 1 einer Windenergieanlage 100 umfasst zunächst ein Bereitstellen 2010 eines in zwei oder mehr Generatorsegmente 10 aufgeteilten segmentierten Generators 1 gemäß dem zuvor beschriebene Verfahren zur Transportvorbereitung für den Transport. Anschließend folgt ein Anordnen und Befestigen 2020 des Generatorsegments 10 der bereitgestellten zwei oder mehr Generatorsegmente 10 des aufgeteilten segmentierten Generators 1 auf einer Transportvorrichtung und ein Transportieren 2030 des auf der Transportvorrichtung angeordneten und befestigten Generatorsegments 10 mit der Transportvorrichtung. In besonders vorteilhafter Weise kann das für den Transport aufgeteilte Generatorsegment ohne weitere Hilfsmittel auf der Transportvorrichtung gelagert werden und beispielsweise mit Spannvorrichtungen, wie zum Beispiel Spannketten und dergleichen, fixiert werden.

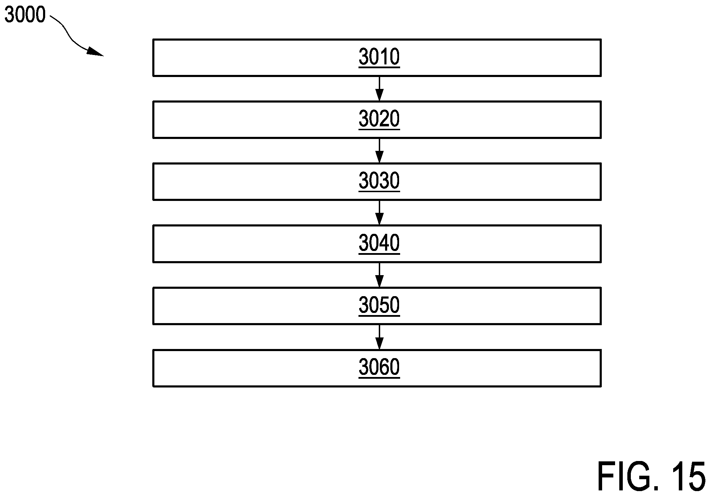

Figur 15 ist ein schematisches Ablaufdiagramm, das exemplarisch Schritte einer bevorzugten Ausführungsform eines Verfahrens 3000 zur Montage eines segmentierten Generators einer Windenergieanlage zeigt.

Das Verfahren 3000 zur Montage des segmentierten Generators 1 einer Windenergieanlage 100 umfasst zunächst ein Bereitstellen 3010 der zwei oder mehr Generatorsegmente 10 des aufgeteilten segmentierten Generators 1 in der Transportposition gemäß dem beschriebenen Verfahren zur Transportvorbereitung und einem sich anschließenden Anordnen 3020 der bereitgestellten zwei oder mehr Generatorsegmente 10 des segmentierten Generators 1 zu einem segmentierten Generator 1 in der Transportposition. Die in der Umfangsrichtung ringförmig zu einem segmentierten Generator 1 zusammengesetzten benachbarten Generatorsegmente 10 werden miteinander befestigt 3030. Anschließend werden die bereitgestellten zwei oder mehr Generatorsegmente 10 des aufgeteilten segmentierten Generators 1 an einer Lagereinheit 400 befestigt 3040.

Der Schritt des Befestigens 3040 der bereitgestellten zwei oder mehr Generatorsegmente 10 des aufgeteilten segmentierten Generators 1 an der Lagereinheit 400 umfasst insbesondere folgende Schritte: Zunächst ein Ausrichten der Lagereinheit 400 radial an dem Stator und ein Befestigen der Lagereinheit 400 an dem Stator. Anschließend folgt ein Lösen der Befestigungsvorrichtung 500 von dem Rotor 106 und dem Stator 109 in der Transportposition und ein Aufschieben des Rotors 106 auf die Lagereinheit 400, wobei die Lagereinheit insbesondere als Führungsvorrichtung für den Rotor 106 dient. Der Rotor wird dann 106 gegenüber dem Stator 109 relativ zueinander um den Axialabstand A entlang der Drehachse D des Rotors 106 von der Transportposition in die Betriebsposition verschoben und die Lagereinheit 400 an dem Rotor 106 befestigt.

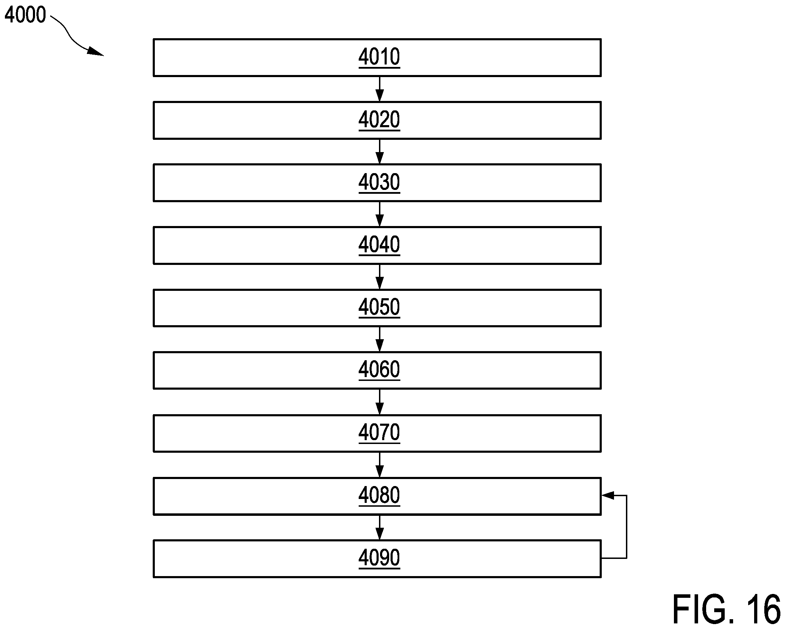

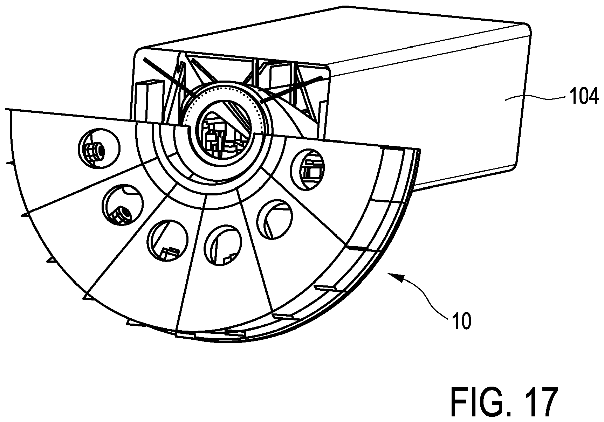

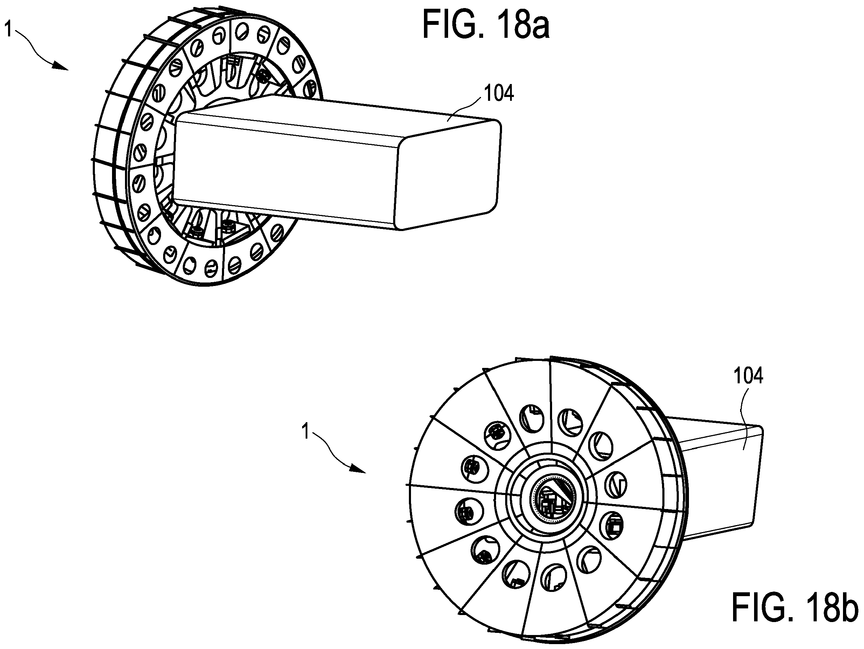

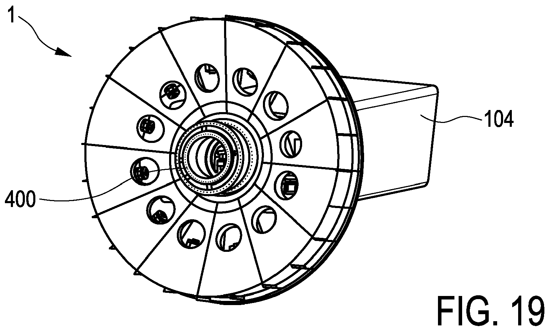

Figur 16 ist ein schematisches Ablaufdiagramm, das exemplarisch Schritte einer bevorzugten Ausführungsform eines Verfahrens 4000 zur Montage einer Windenergieanlage zeigt. In den Figuren 17 bis 19 sind die einzelnen Zwischenschritte zur Montage der Windenergieanlage exemplarisch dargestellt.

Das Verfahren 4000 zur Montage einer Windenergieanlage umfasst ein Bereitstellen 4010, 4020 eines Turms einer Windenergieanlage 100 in einem Einbauzustand mit einer darauf angeordneten Gondel 104 mit Maschinenträger 105 und der zwei Generatorsegmente 10 des aufgeteilten segmentierten Generators 1 gemäß dem beschriebenen Verfahren zur Transportvorbereitung jeweils in der Transportposition. Anschließend werden die zwei bereitgestellten Generatorsegmente 10 sequenziell an dem Maschinenträger 105 befestigt 4030 und zu einem segmentierten Generator angeordnet. Die Figuren 14 und 15a,b zeigen schematisch die einzelnen Schritte der sequenziellen Befestigung der beiden Generatorsegmente an dem Maschinenträger 105. Anschließend folgt ein Bereitstellen 4040 einer Lagereinheit 400 und dessen Befestigen 4050 an dem Maschinenträger 105 und den Statorsegmenten 300. Insbesondere ist zu verstehen, dass das feststehende Lagerteil 402 mit dem Maschinenträger 105 verbunden wird. Die an dem Maschinenträger 105 und den Statorsegmenten 300 befestigte Lagereinheit 400 zeigt exemplarisch Figur 16. Anschließend wird der segmentierte Rotor des segmentierten Generators 1 relativ zu dem segmentierten Stator des segmentierten Generators 1 von der Transportposition in die Betriebsposition um den Axialabstand A entlang der Drehachse D verschoben 4060 und der segmentierte Rotor an der Lagereinheit 400, insbesondere an dem drehenden Lagerteil 403, in der Betriebsposition befestigt 4070. Sobald die einzelnen Rotor- und Statorsegmente an der Lagereinheit befestigt wurden, folgt ein Befestigen 4090 der benachbarten Generatorsegmente 10 miteinander zu dem segmentierten Generator in der Umfangsrichtung. Dies erfolgt über die zuvor beschriebenen Anschlussflansche an der ersten und zweiten Trennschnittstelle eines jeden Generatorsegments 10. Hierzu werden die miteinander in der Umfangsrichtung zu befestigenden Generatorsegmente 10, bzw. die miteinander zu befestigenden Rotorsegmente zunächst gedreht 4080, so dass die Trennschnittstellen benachbarter Generatorsegmente 10 oberhalb der Gondel ausgerichtet sind. Wurden die benachbarten Generatorsegmente miteinander an den oberhalb der Gondel ausgerichteten Trennschnittstellen befestigt 4090, wird der Generator zu den nächsten miteinander zu befestigenden 4090 Trennschnittstellen benachbarter Generatorsegmente gedreht 4080. Dies wird so oft wiederholt bis alle benachbarten Generatorsegmente bzw. Rotorsegmente in der Umfangsrichtung miteinander verbunden sind. Es ist zu verstehen, dass die Anzahl der Wiederholungen der Verfahrensschritte des Drehens 4080 und des Befestigens 4090 der Anzahl der zu montierenden Generatorsegmente 10 des zu montierenden segmentierten Generator entspricht. Dieses Vorgehen ermöglicht eine Montage des segmentierten Generators, insbesondere eines als Außenläufer ausgebildeten segmentierten Generators, bei vergleichsweise hoher Arbeitssicherheit. Ist dies erfolgt und sind die übrigen üblichen Montageschritte abgeschlossen, befindet sich die Windenergieanlage im Betriebszustand und kann die kinetische Energie des Windes in elektrische Energie wandeln.

### BEZUGSZEICHENLISTE

- 1: segmentierter Generator
- 10: Generatorsegment
- 100: Windenergieanlage
- 102: Turm
- 104: Gondel
- 105: Maschinenträger
- 106: Rotor
- 106a: aerodynamischer Rotor
- 108: Rotorblätter
- 109: Stator
- 110: Spinner
- 200: Rotorsegment
- 201: erster Befestigungsanschluss des Rotorsegments
- 202: zweiter Befestigungsanschluss des Rotorsegments
- 210: Magnetträgersegment
- 300: Statorsegment
- 301: erster Befestigungsanschluss des Statorsegments
- 302: zweiter Befestigungsanschluss des Statorsegments
- 310: Spulenträgersegment
- 400: Lagereinheit
- 401: feststehendes Lagerteil
- 402: Stator-Grundkörperflansch
- 403: drehendes/drehbares Lagerteil
- 404: Rotor-Grundkörperflansch
- 405: Lagerelemente
- 500: Befestigungsvorrichtung
- 501: erste Befestigungseinheit
- 502: zweite Befestigungseinheit
- 600: Führungsvorrichtung
- 601: erste Führungseinheit
- 602: zweite Führungseinheit
- A: Axialabstand
- D: Drehachse
- S: Luftspalt

## Patentansprüche

1. Generatorsegment (10) für einen segmentierten Generator (1), insbesondere für einen permanenterregten segmentierten Drehgenerator (1), einer Windenergieanlage (100), umfassend
- ein Rotorsegment (200) eines Rotors (106), wobei sich das Rotorsegment (200) in einer Radialrichtung (R) zwischen einem radial innenliegenden Flansch zur Befestigung des Rotorsegments (200) an einem Rotor-Grundkörperflansch (404) einer Lagereinheit (400) und einem radial außenliegenden Magnetträgersegment (210) erstreckt, und
- ein Statorsegment (300) eines Stators (109), wobei das Statorsegment (300) sich in der Radialrichtung (R) zwischen einem radial innenliegenden Flansch zur Befestigung des Statorsegments (300) an einem Stator-Grundkörperflansch (402) der Lagereinheit (400) und einem radial außenliegenden Spulenträgersegment (310) erstreckt, wobei
- das Rotorsegment (200) und das Statorsegment (300) in einer Betriebsposition mit einem Luftspalt (S) in einer Radialrichtung beabstandet zueinander angeordnet sind und mit einem Axialabstand (A) in einer Axialrichtung beabstandet zueinander angeordnet sind; wobei
- das Rotorsegment (200) und das Statorsegment (300) relativ zueinander um den Axialabstand (A) entlang einer Drehachse (D) zwischen einer Betriebsposition und einer Transportposition, die von der Betriebsposition verschieden ist, anordenbar und/oder verschiebbar sind **dadurch gekennzeichnet, dass**
- der Luftspalt (S) in der Betriebsposition dem Luftspalt (S) in der Transportposition entspricht.

2. Generatorsegment (10) nach dem vorhergehenden Anspruch 1, wobei
- das Rotorsegment (200) einen oder mehrere erste und/oder zweite Befestigungsanschlüsse (201, 202) aufweist; wobei vorzugsweise mehrere erste und/oder zweite Befestigungsanschlüsse (201, 202) in einer Umfangsrichtung äquidistant zueinander angeordnet sind; und/oder
- das Statorsegment (300) einen oder mehrere erste und/oder zweite Befestigungsanschlüsse (301, 302) aufweist; wobei vorzugsweise mehrere erste und/oder zweite Befestigungsanschlüsse (301, 302) in einer Umfangsrichtung äquidistant zueinander angeordnet sind; wobei
- das Rotorsegment (200) und das Statorsegment (300) bevorzugt über die jeweils ersten und/oder zweiten Befestigungsanschlüsse (201, 202, 301, 302) in der Transportposition miteinander verbunden sind.

3. Generatorsegment (10) nach einem der vorhergehenden Ansprüche 1-2, umfassend
- eine Befestigungsvorrichtung (500) zum Fixieren des Rotorsegments (200) an dem Statorsegment (300) in der Transportposition, wobei die Befestigungsvorrichtung (500) vorzugsweise eine erste und zweite Befestigungseinheit (502) umfasst, wobei vorzugsweise die erste Befestigungseinheit (501) von der zweiten Befestigungseinheit verschieden ist; und/oder
- eine Führungsvorrichtung (600) zum Führen des relativ zueinander verschiebbaren Rotorsegments (200) und Statorsegments (300) entlang der Drehachse (D) von der Betriebsposition in die Transportposition und/oder umgekehrt; wobei die Führungsvorrichtung (600) vorzugsweise eine erste und zweite Führungseinheit (601, 602) umfasst, wobei vorzugsweise die erste Führungseinheit (601) von der zweiten Führungseinheit (602) verschieden ist.

4. Generatorsegment (10) nach dem vorhergehenden Anspruch 3,
die Befestigungsvorrichtung (500) umfassend
- eine Schraubvorrichtung zur Fixierung des Rotorsegments (200) mit dem Statorsegment (300) in der Transportposition; und/oder
- die erste Befestigungseinheit (501) aufweisend ein Winkelelement mit zwei Befestigungsflächen, jeweils insbesondere aufweisend ein oder mehrere als Durchgangslöcher ausgebildete Langlöcher, und eine Schraubvorrichtung; und/oder
- die zweite Befestigungseinheit (502) aufweisend eine Schraubvorrichtung; und/oder
die Führungsvorrichtung (600) umfassend
- einen oder mehrere als die erste Führungseinheit (601) ausgebildete Arretierungsbolzen; und/oder
- die als zweite Führungseinheit (602) ausgebildete erste Befestigungseinheit (501).

5. Segmentierter Generator (1), insbesondere eines permanenterregten segmentierten Drehgenerators (1), für eine Windenergieanlage (100), umfassend zwei oder mehrere Generatorsegmente (10) nach einem der Ansprüche 1-4, die ringförmig angeordnet sind.

6. Windenergieanlage (100) umfassend einen segmentierten Generator (1) nach Anspruch 5.

7. Verfahren zur Transportvorbereitung eines segmentierten Generators (1), insbesondere eines permanenterregten segmentierten Drehgenerators (1), einer Windenergieanlage (100),
der segmentierte Generator nach Anspruch 5 aufweisend
- einen Stator (109) mit zwei oder mehr Statorsegmenten (300) und einen Rotor (106) mit zwei oder mehr Rotorsegmenten (200), die konzentrisch zu einer Drehachse (D) angeordnet sind; wobei
- der Rotor (106) und der Stator (109) in einer Betriebsposition mit einem Luftspalt (S) in einer Radialrichtung beabstandet zueinander angeordnet sind und mit einem Axialabstand (A) in einer Axialrichtung beabstandet zueinander angeordnet sind; und wobei
- jeweils ein Statorsegment (300) der zwei oder mehr Statorsegmente (300) und jeweils ein Rotorsegment (200) der zwei oder mehr Rotorsegmente (200) ein Generatorsegment (10) bilden;
das Verfahren umfassend die Schritte:
- Bereitstellen des segmentierten Generators (1); und
- Verschieben des Rotors (106) und des Stators (109) des hergestellten segmentierten Generators (1) in der Betriebsposition relativ zueinander um den Axialabstand (A) entlang der Drehachse (D) des Rotors (106) von der Betriebsposition in eine Transportposition, die von der Betriebsposition verschieden ist,
**dadurch gekennzeichnet, dass**
- während des Schritts des Verschiebens des Rotors (106) und des Stators (109) des hergestellten segmentierten Generators (1) in der Betriebsposition relativ zueinander um den Axialabstand (A) entlang der Drehachse (D) des Rotors (106) von der Betriebsposition in eine Transportposition und/oder umgekehrt der Luftspalt (S) in der Radialrichtung im Wesentlichen konstant bleibt.

8. Verfahren nach dem vorhergehenden Anspruch 7, wobei der segmentierte Generator (1) eine Lagereinheit (400) aufweist, an der der Rotor (106) und/oder der Stator (109) befestigt sind;
das Verfahren umfassend die Schritte:
- Lösen des Rotors (106) und/oder des Stators (109) von der Lagereinheit (400).

9. Verfahren nach einem der vorhergehenden Ansprüche 7-8,
der segmentierte Generator (1) aufweisend
- eine Befestigungsvorrichtung (500), wobei die Befestigungsvorrichtung (500) vorzugsweise eine erste und/oder zweite Befestigungseinheit (501, 502) umfasst, wobei vorzugsweise die erste Befestigungseinheit (501) von der zweiten Befestigungseinheit (502) verschieden ist; und/oder
- eine Führungsvorrichtung (600), wobei die Führungsvorrichtung (600) vorzugsweise eine erste und/oder zweite Führungsvorrichtung (600) umfasst, wobei vorzugsweise die erste Führungsvorrichtung (600) von der zweiten Führungsvorrichtung (600) verschieden ist;
das Verfahren umfassend die Schritte:
- Fixieren des Rotors (106) und des Stators (109) miteinander mit der Befestigungsvorrichtung (500) in der Transportposition; wobei der Schritt des Fixierens insbesondere einen der folgenden Schritte alleine oder in Kombination umfasst:
∘ Bereitstellen einer ersten und/oder zweiten Befestigungseinheit (501, 502); und/oder
∘ Anordnen der ersten und/oder zweiten Befestigungseinheit (501, 502) an dem Stator; und/oder
∘ Ausrichten der ersten Befestigungseinheit (501) gegenüber dem Rotor; und/oder
∘ Befestigen des Rotors (106) und des Stators (109) miteinander mit der ersten und/oder zweiten Befestigungseinheit (501, 502); und/oder
- Führen des Rotors (106) und des Stators (109) relativ zueinander mit einer Führungsvorrichtung (600) während des Schritts des Verschiebens des Rotors (106) und des Stators (109) des hergestellten segmentierten Generators (1) in der Betriebsposition relativ zueinander von der Betriebsposition in die Transportposition und/oder umgekehrt.

10. Verfahren nach einem der vorhergehenden Ansprüche 7-9,
das Verfahren umfassend die Schritte:
- Aufteilen des segmentierten Generators (1) in zwei oder mehr Generatorsegmente (10).

11. Verfahren zum Transport eines segmentierten Generators (1), insbesondere eines permanenterregten segmentierten Drehgenerators (1), einer Windenergieanlage (100), umfassend
- Bereitstellen eines nach dem vorhergehenden Anspruch 10 in zwei oder mehr Generatorsegmente (10) aufgeteilten segmentierten Generators (1) für den Transport; und/oder
- Anordnen und Befestigen eines Generatorsegments (10) der bereitgestellten zwei oder mehr Generatorsegmente (10) des aufgeteilten segmentierten Generators (1) auf einer Transportvorrichtung; und/oder
- Transportieren des auf der Transportvorrichtung angeordneten und befestigten Generatorsegments (10) mit der Transportvorrichtung.

12. Verfahren zur Montage eines segmentierten Generators (1), insbesondere eines permanenterregten segmentierten Drehgenerators (1), einer Windenergieanlage (100), umfassend
- Bereitstellen der zwei oder mehr Generatorsegmente (10) des nach Anspruch 10 aufgeteilten segmentierten Generators (1); und/oder
- Anordnen der bereitgestellten zwei oder mehr Generatorsegmente (10) des segmentierten Generators (1) zu einem segmentierten Generator (1) in der Transportposition; und/oder
- Befestigen benachbarter Generatorsegmente (10) der zu einem segmentierten Generator (1) ringförmig angeordneten zwei oder mehr Generatorsegmente (10); und/oder
- Befestigen der bereitgestellten zwei oder mehr Generatorsegmente (10) des aufgeteilten segmentierten Generators (1) an einer Lagereinheit (400).

13. Verfahren nach dem vorhergehenden Anspruch, wobei der Schritt des Befestigens der bereitgestellten zwei oder mehr Generatorsegmente (10) des aufgeteilten segmentierten Generators (1) an der Lagereinheit (400) einen der folgenden Schritte alleine oder in Kombination umfasst:
- Ausrichten der Lagereinheit (400) radial an dem Stator; und/oder
- Befestigen der Lagereinheit (400), insbesondere eines Statorträgers der Lagereinheit (400), an dem Stator; und/oder
- Lösen der Befestigungsvorrichtung (500) von dem Rotor (106) und dem Stator (109) in der Transportposition; und/oder
- Aufschieben des Rotors (106) auf die Lagereinheit (400), insbesondere auf einen Rotorträger der Lagereinheit (400); wobei die Lagereinheit insbesondere als Führungsvorrichtung für den Rotor (106) dient; und/oder
- Verschieben des Rotors (106) gegenüber dem Stator (109) relativ zueinander um den Axialabstand (A) entlang der Drehachse (D) des Rotors (106) von der Transportposition in die Betriebsposition; und/oder
- Befestigen der Lagereinheit (400), insbesondere eines Rotorträgers der Lagereinheit (400), an dem Rotor (106).

14. Verfahren zur Montage einer Windenergieanlage (100), umfassend:
- Bereitstellen eines Turms (102) einer Windenergieanlage (100) in einem Einbauzustand mit einer darauf angeordneten Gondel (104) mit Maschinenträger (105); und
- Bereitstellen der zwei oder mehr Generatorsegmente (10) des nach Anspruch 10 aufgeteilten segmentierten Generators (1); und/oder
- Befestigen, insbesondere sequenzielles Befestigen, der bereitgestellten zwei oder mehr Generatorsegmente (10) des aufgeteilten segmentierten Generators (1) an dem Maschinenträger (105) zu einem segmentierten Generator; und/oder
- Bereitstellen einer Lagereinheit (400); und/oder
- Befestigen der Lagereinheit (400) an dem Maschinenträger (105) der Gondel (104) und/oder den zwei oder mehreren Generatorsegmenten (10), insbesondere an einem segmentierten Stator des segmentierten Generators (1); und/oder
- Verschieben eines segmentierten Rotors des segmentierten Generators (1) relativ zu dem segmentierten Stator des segmentierten Generators (1) von einer Transportposition in eine Betriebsposition um den Axialabstand (A) entlang einer Drehachse (D), wobei die Betriebsposition von der Transportposition verschieden ist; und/oder
- Befestigen des segmentierten Rotors an der Lagereinheit (400) in der Betriebsposition und/oder
- Drehen des an der Lagereinheit (400) befestigten segmentierten Rotors (106), und/oder
- Befestigen in einer Umfangsrichtung benachbarter Generatorsegmente (10) miteinander zu dem segmentierten Generator, insbesondere Befestigen der in der Umfangsrichtung benachbart angeordneten Rotorsegmente zu einem segmentierten Rotor.

## Claims

1. Generator segment (10) for a segmented generator (1), in particular for a permanently excited rotary generator (1), of a wind turbine (1), comprising
- a rotor segment (200) of a rotor (106), wherein the rotor segment (200) extends in a radial direction (R) between a radially inner flange for securing the rotor segment (200) to a rotor base member flange (404) of a bearing unit (400) and a radially outer magnet carrier segment (210), and
- a stator segment (300) of a stator (109), wherein the stator segment (300) extends in the radial direction (R) between a radially inner flange for securing the stator segment (300) to a stator base member flange (402) of the bearing unit (400) and a radially outer coil carrier segment (310), wherein
- the rotor segment (200) and the stator segment (300) are arranged in an operating position spaced apart from each other in a radial direction with an air gap (S) and are arranged spaced apart from each other with an axial spacing (A) in an axial direction; wherein
- the rotor segment (200) and the stator segment (300) can be arranged and/or displaced relative to each other by the axial spacing (A) along a rotation axis (D) between an operating position and a transport position which is different from the operating position,
**characterised in that**
- the air gap (S) in the operating position corresponds to the air gap (S) in the transport position.

2. Generator segment (10) according to the preceding claim 1, wherein
- the rotor segment (200) has one or more first and/or second securing connections (201, 202); wherein a plurality of first and/or second securing connections (201, 202) are preferably arranged in an equidistant manner with respect to each other in a circumferential direction; and/or
- the stator segment (300) has one or more first and/or second securing connections (301, 302); wherein a plurality of first and/or second securing connections (301, 302) are preferably arranged in an equidistant manner with respect to each other in a circumferential direction; wherein
- the rotor segment (200) and the stator segment (300) are preferably connected to each other in the transport position by means of the first and/or second securing connections (201, 202, 301, 302) in each case.

3. Generator segment (10) according to either of the preceding claims 1-2, comprising
- a securing apparatus (500) for fixing the rotor segment (200) to the stator segment (300) in the transport position, wherein the securing apparatus (500) preferably comprises a first and a second securing unit (502), wherein the first securing unit (501) is preferably different from the second securing unit; and/or
- a guiding apparatus (600) for guiding the rotor segment (200) and stator segment (300) which can be displaced relative to each other along the rotation axis (D) from the operating position into the transport position and/or vice versa; wherein the guiding apparatus (600) preferably comprises a first and a second guiding unit (601, 602), wherein the first guiding unit (601) is preferably different from the second guiding unit (602).

4. Generator segment (10) according to the preceding claim 3, the securing apparatus (500) comprising
- a screw apparatus for fixing the rotor segment (200) to the stator segment (300) in the transport position; and/or
- the first securing unit (501) having an angled element having two securing faces, each in particular having one or more elongate holes which are in the form of through-holes, and a screw apparatus; and/or
- the second securing unit (502) having a screw apparatus; and/or
the guiding apparatus (600) comprising
- one or more locking pins which are in the form of the first guiding unit (601); and/or
- the first securing unit (501) which is in the form of a second guiding unit (602).

5. Segmented generator (1), in particular a permanently excited segmented rotary generator (1), for a wind turbine (100), comprising two or more generator segments (10) according to any one of claims 1 to 4 which are arranged in an annular manner.

6. Wind turbine (100) comprising a segmented generator (1) according to claim 5.

7. Method for preparation for transport of a segmented generator (1), in particular a permanently excited segmented rotary generator (1), of a wind turbine (100), the segmented generator according to claim 5 having
- a stator (109) having two or more stator segments (300) and a rotor (106) having two or more rotor segments (200), which are arranged concentrically with respect to a rotation axis (D); wherein
- the rotor (106) and the stator (109) are arranged in an operating position with spacing from each other with an air gap (S) in a radial direction and are arranged with spacing from each other with an axial spacing (A) in an axial direction; and wherein
- in each case a stator segment (300) of the two or more stator segments (300) and in each case a rotor segment (200) of the two or more rotor segments (200) form a generator segment (10);
the method comprising the steps of:
- providing the segmented generator (1); and
- displacing the rotor (106) and the stator (109) of the segmented generator (1) produced in the operating position relative to each other by the axial spacing (A) along the rotation axis (D) of the rotor (106) from the operating position into a transport position which is different from the operating position,
**characterised in that**
- during the step of displacing the rotor (106) and the stator (109) of the produced segmented generator (1) in the operating position relative to each other by the axial spacing (A) along the rotation axis (D) of the rotor (106) from the operating position into a transport position and/or vice versa, the air gap (S) in the radial direction remains substantially constant.

8. Method according to the preceding claim 7, wherein the segmented generator (1) has a bearing unit (400) to which the rotor (106) and/or the stator (109) are secured;
the method comprising the steps of:
- releasing the rotor (106) and/or the stator (109) from the bearing unit (400).

9. Method according to any one of the preceding claims 7-8,
the segmented generator (1) having
- a securing apparatus (500), wherein the securing apparatus (500) preferably comprises a first and/or second securing unit (501, 502), wherein the first securing unit (501) is preferably different from the second securing unit (502); and/or
- a guiding apparatus (600), wherein the guiding apparatus (600) preferably comprises a first and/or second guiding apparatus (600), wherein the first guiding apparatus (600) is preferably different from the second guiding apparatus (600);
the method comprising the steps of:
- fixing the rotor (106) and the stator (109) to each other with the securing apparatus (500) in the transport position; wherein the step of fixing in particular comprises one of the following steps alone or in combination:
∘ providing a first and/or a second securing unit (501, 502); and/or
∘ arranging the first and/or second securing unit (501, 502) on the stator; and/or
∘ orientating the first securing unit (501) with respect to the rotor; and/or
∘ securing the rotor (106) and the stator (109) to each other with the first and/or second securing unit (501, 502); and/or
- guiding the rotor (106) and the stator (109) relative to each other with a guiding apparatus (600) during the step of displacing the rotor (106) and the stator (109) of the produced segmented generator (1) in the operating position relative to each other from the operating position into the transport position and/or vice versa.

10. Method according to any one of the preceding claims 7-9,
the method comprising the steps of:
- dividing the segmented generator (1) into two or more generator segments (10).

11. Method for transporting a segmented generator (1), in particular a permanently excited segmented rotary generator (1), of a wind turbine (100), involving
- providing a segmented generator (1) which is divided into two or more generator segments (10) according to the preceding claim 10 for the transport; and/or
- arranging and securing a generator segment (10) of the provided two or more generator segments (10) of the divided segmented generator (1) on a transport apparatus; and/or
- transporting the generator segment (10) which is arranged and secured on the transport apparatus using the transport apparatus.

12. Method for assembling a segmented generator (1), in particular a permanently excited segmented rotary generator (1), of a wind turbine (100), involving
- providing the two or more generator segments (10) of the segmented generator (1) divided according to claim 10; and/or
- arranging the provided two or more generator segments (10) of the segmented generator (1) to form a segmented generator (1) in the transport position; and/or
- securing adjacent generator segments (10) of the two or more generator segments (10) which are arranged in an annular manner to form a segmented generator (1); and/or
- securing the two or more provided generator segments (10) of the divided segmented generator (10) to a bearing unit (400).

13. Method according to the preceding claim, wherein the step of securing the provided two or more generator segments (10) of the divided segmented generator (1) to the bearing unit (400) involves one of the following steps alone or in combination:
- orientating the bearing unit (400) radially on the stator; and/or
- securing the bearing unit (400), in particular a stator carrier of the bearing unit (400), to the stator; and/or
- releasing the securing apparatus (500) from the rotor (106) and the stator (109) in the transport position; and/or
- pushing the rotor (106) onto the bearing unit (400), in particular onto a rotor carrier of the bearing unit (400); wherein the bearing unit acts in particular as a guiding apparatus for the rotor (106); and/or
- displacing the rotor (106) with respect to the stator (109) relative to each other by the axial spacing (A) along the rotation axis (D) of the rotor (106) from the transport position into the operating position; and/or
- securing the bearing unit (400), in particular a rotor carrier of the bearing unit (400), to the rotor (106).

14. Method for assembling a wind turbine (100) involving:
- providing a tower (102) of a wind turbine (100) in an installation state with a nacelle (104) which is arranged thereon with a machine carrier (105); and
- providing the two or more generator segments (10) of the segmented generator (1) divided according to claim 10; and/or
- securing, in particular sequentially securing, the provided two or more generator segments (10) of the divided segmented generator (1) to the machine carrier (105) to form a segmented generator; and/or
- providing a bearing unit (400); and/or
- securing the bearing unit (400) to the machine carrier (105) of the nacelle (104) and/or the two or more generator segments (10), in particular to a segmented stator of the segmented generator (1); and/or
- displacing a segmented rotor of the segmented generator (1) relative to the segmented stator of the segmented generator (1) from a transport position into an operating position by the axial spacing (A) along a rotation axis (D), wherein the operating position is different from the transport position; and/or
- securing the segmented rotor to the bearing unit (400) in the operating position and/or
- rotating the segmented rotor (106) secured to the bearing unit (400), and/or
- securing adjacent generator segments (10) in a circumferential direction to each other to form the segmented generator, in particular securing the rotor segments which are arranged adjacent in the circumferential direction to form a segmented rotor.

## Revendications

1. Segment de générateur (10) pour un générateur segmenté (1), en particulier pour un générateur triphasé segmenté à aimants permanents (1), d'une éolienne (100), comportant
- un segment de rotor (200) d'un rotor (106), dans lequel le segment de rotor (200) s'étend dans une direction radiale (R) entre un flasque placé radialement à l'intérieur pour fixer le segment de rotor (200) au niveau d'un flasque de corps de base de rotor (404) d'une unité d'appui (400) et un segment porteur d'aimants (210) placé radialement à l'extérieur, et
- un segment de stator (300) d'un stator (109), dans lequel le segment de stator (300) s'étend dans la direction radiale (R) entre un flasque placé radialement à l'intérieur pour la fixation du segment de stator (300) au niveau d'un flasque de corps de base de stator (402) de l'unité d'appui (400) et un segment porteur de bobines (310) placé radialement à l'extérieur, dans lequel
- le segment de rotor (200) et le segment de stator (300) sont disposés écartés l'un de l'autre d'un entrefer (S) dans une direction radiale à une position de fonctionnement et sont disposés écartés l'un de l'autre d'un écart axial (A) dans une direction axiale ; dans lequel
- le segment de rotor (200) et le segment de stator (300) peuvent être disposés et/ou décalés l'un par rapport à l'autre de l'écart axial (A) le long d'un axe de rotation (D) entre une position de fonctionnement et une position de transport, qui est différente de la position de fonctionnement,
**caractérisé en ce que**
- l'entrefer (S) à la position de fonctionnement correspond à l'entrefer (S) à la position de transport.

2. Segment de générateur (10) selon la revendication précédente 1, dans lequel
- le segment de rotor (200) comprend un ou plusieurs premiers et/ou deuxièmes raccords de fixation (201, 202) ; dans lequel de préférence plusieurs premiers et/ou deuxièmes raccords de fixation (201, 202) sont disposés équidistants les uns des autres dans une direction circonférentielle ; et/ou
- le segment de stator (300) comprend un ou plusieurs premiers et/ou deuxièmes raccords de fixation (301, 302) ; dans lequel de préférence plusieurs premiers et/ou deuxièmes raccords de fixation (301, 302) sont disposés équidistants les uns des autres dans une direction circonférentielle ; dans lequel
- le segment de rotor (200) et le segment de stator (300) sont reliés les uns aux autres dans la position de transport de préférence via les premiers et/ou deuxièmes raccords de fixation (201, 202, 301, 302) respectifs.

3. Segment de générateur (10) selon l'une quelconque des revendications 1 - 2, comportant
- un dispositif de fixation (500) pour fixer le segment de rotor (200) au segment de stator (300) dans la position de transport, dans lequel le dispositif de fixation (500) comporte de préférence une première et une deuxième unité de fixation (502), dans lequel la première unité de fixation (501) est de préférence différente de la deuxième unité de fixation ; et/ou
- un dispositif de guidage (600) pour guider le segment de rotor (200) et le segment de stator (300) décalables l'un par rapport l'autre le long de l'axe de rotation (D) de la position de fonctionnement à la position de transport et/ou inversement ; dans lequel le dispositif de guidage (600) comporte de préférence une première et une deuxième unité de guidage (601, 602), dans lequel de préférence la première unité de guidage (601) est différente de la deuxième unité de guidage (602) .

4. Segment de générateur (10) selon la revendication précédente 3, le dispositif de fixation (500) comportant
- un dispositif de vissage pour fixer le segment de rotor (200) au segment de stator (300) dans la position de transport ; et/ou
- la première unité de fixation (501) comprenant un élément en équerre avec deux surfaces de fixation, comprenant chacune respectivement un ou plus trous oblongs conçus sous forme de trous débouchants, et un dispositif de vissage ; et/ou
- la deuxième unité de fixation (502) comprenant un dispositif de vissage ; et/ou
le dispositif de guidage (600) comportant
- un ou plusieurs axes d'arrêt conçus en tant que première unité de guidage (601) ; et/ou
- la première unité de fixation (501) conçue en tant que deuxième unité de guidage (602).

5. Générateur segmenté (1), en particulier d'un générateur triphasé segmenté à aimants permanents (1), pour une éolienne (100), comportant deux segments de générateur (10) ou plus selon l'une quelconque des revendications 1 à 4, qui sont disposés en forme d'anneau.

6. Éolienne (100) comportant un générateur segmenté (1) selon la revendication 5.

7. Procédé de préparation au transport d'un générateur segmenté (1), en particulier d'un générateur triphasé segmenté à aimants permanents (1), d'une éolienne (100),
le générateur segmenté selon la revendication 5 comprenant
- un stator (109) avec deux segments de stator (300) ou plus et un rotor (106) avec deux segments de rotor (200) ou plus, qui sont disposés concentriques à un axe de rotation (D) ; dans lequel
- le rotor (106) et le stator (109) sont disposés à une position de fonctionnement écartés l'un de l'autre d'un entrefer (S) dans une direction axiale et sont disposés écartés l'un de l'autre d'un écart axial (A) dans une direction axiale ; et dans lequel
- respectivement un segment de stator (300) des deux segments de stator (300) ou plus et respectivement un segment de rotor (200) des deux segments de rotor (200) ou plus forment un segment de générateur (10);
le procédé comportant les étapes suivantes :
- l'utilisation d'un générateur segmenté (1) ; et
- le décalage du rotor (106) et du stator (109) du générateur segmenté (1) réalisé l'un par rapport à l'autre dans la position de fonctionnement de l'écart axial (A) le long de l'axe de rotation (D) du rotor (106) de la position de fonctionnement à une position de transport, qui est différente de la position de fonctionnement,
**caractérisé en ce que**
- durant l'étape de décalage du rotor (106) et du stator (109) du générateur segmenté (1) réalisé l'un par rapport dans la position de fonctionnement de l'écart axial (A) le long de l'axe de rotation (D) du rotor (106) de la position de fonctionnement à une position de transport et/ou inversement, l'entrefer (S) dans la direction radiale reste sensiblement constant.

8. Procédé selon la revendication précédente 7, dans lequel le générateur segmenté (1) comprend une unité d'appui (400) à laquelle le rotor (106) et/ou le stator (109) sont fixés ;
le procédé comportant l'étape suivante :
- le démontage du rotor (106) et/ou du stator (109) de l'unité d'appui (400).

9. Procédé selon l'une quelconque des revendications précédentes 7 - 8,
le générateur segmenté (1) comprenant
- un dispositif de fixation (500), dans lequel le dispositif de fixation (500) comporte de préférence une première et/ou une deuxième unité de fixation (501, 502), dans lequel de préférence la première unité de fixation (501) est différente de la deuxième unité de fixation (502) ; et/ou
- un dispositif de guidage (600), dans lequel le dispositif de guidage (600) comporte de préférence un premier et/ou un deuxième dispositif de guidage (600), dans lequel de préférence le premier dispositif de guidage (600) est différent du deuxième dispositif de guidage (600) ;
le procédé comportant les étapes suivantes :
- la fixation du rotor (106) et du stator (109) l'un avec l'autre avec le dispositif de fixation (500) dans la position de transport ; dans lequel l'étape de fixation comporte en particulier une des étapes suivantes seule ou combinée :
∘ l'utilisation d'une première et/ou d'une deuxième unité de fixation (501, 502) ; et/ou
∘ la disposition de la première et/ou de la deuxième unité de fixation (501, 502) au niveau du stator ; et/ou
∘ l'orientation de la première unité de fixation (501) par rapport au rotor ; et/ou
∘ la fixation du rotor (106) et du stator (109) l'un avec l'autre avec la première et/ou la deuxième unité de fixation (501, 502) ; et/ou
- le guidage du rotor (106) et du stator (109) l'un par rapport à l'autre avec un dispositif de guidage (600) pendant l'étape de décalage du rotor (106) et du stator (109) du générateur segmenté (1) réalisé dans la position de fonctionnement par rapport à la position de fonctionnement dans la position de transport et/ou inversement.

10. Procédé selon l'une quelconque des revendications précédentes 7 - 9, le procédé comportant l'étape suivante :
la division du générateur segmenté (1) en deux segments de générateur (10) ou plus.

11. Procédé de transport d'un générateur segmenté (1), en particulier d'un générateur triphasé segmenté à aimants permanents (1), d'une éolienne (100), comportant
- l'utilisation d'un générateur segmenté (1) divisé selon la revendication précédente 10 en deux segments de générateur (10) ou plus pour le transport ; et/ou
- la disposition et la fixation d'un segment de générateur (10) des deux segments de générateur (10) ou plus utilisés du générateur segmenté (1) divisé sur un dispositif de transport ; et/ou
- le transport du segment de générateur (10) disposé et fixé sur le dispositif de transport avec le dispositif de transport.

12. Procédé de montage d'un générateur segmenté (1), en particulier d'un générateur triphasé segmenté à aimants permanents (1), d'une éolienne (100), comportant
- l'utilisation des deux segments de générateur (10) ou plus du générateur segmentés (1) divisé selon la revendication 10 et/ou
- la disposition des deux segments de générateur (10) ou plus utilisés du générateur segmenté (1) en un générateur segmenté (1) dans la position de transport ; et/ou
- la fixation de segments de générateur (10) voisins des deux segments de générateur (10) ou plus disposés en forme d'anneau en un générateur segmenté (1) ; et/ou
- la fixation des deux segments de générateur (10) ou plus utilisés du générateur segmenté (1) divisé au niveau d'une unité d'appui (400).

13. Procédé selon la revendication précédente, dans lequel l'étape de la fixation des deux segments de générateur (10) ou plus utilisés du générateur segmenté (1) divisé au niveau d'une unité d'appui (400) comporte une des étapes suivantes seule ou combinée :
- l'orientation de l'unité d'appui (400) radialement au stator ; et/ou
- la fixation de l'unité d'appui (400), en particulier d'un support de stator de l'unité d'appui (400), au stator ; et/ou
- le démontage du dispositif de fixation (500) du rotor (106) et du stator (109) dans la position de transport ; et/ou
- le décalage du rotor (106) sur l'unité d'appui (400), en particulier sur un support de rotor de l'unité d'appui (400) ; dans lequel l'unité d'appui sert en particulier de dispositif de guidage pour le rotor (106) ; et/ou
- le décalage du rotor (106) par rapport au stator (109) l'un par rapport à l'autre de l'écart axial (A) le long de l'axe de rotation (D) du rotor (106) de la position de transport à la position de fonctionnement ; et/ou
- la fixation de l'unité d'appui (400), en particulier d'un support de rotor de l'unité d'appui (400), au niveau du rotor (106).

14. Procédé de montage d'une éolienne (100), comportant :
- l'utilisation d'une tour (102) d'une éolienne (100) dans un état d'installation avec une nacelle (104) disposée dessus avec un support de machine (105) ; et
- l'utilisation des deux segments de générateur (10) ou plus du générateur segmenté (1) divisé selon la revendication 10 ; et/ou
- la fixation, en particulier la fixation séquentielle, des deux segments de générateur (10) ou plus utilisés du générateur segmenté (1) divisé au niveau du support de machine (105) en un générateur segmenté ; et/ou
- l'utilisation d'une unité d'appui (400) ; et/ou
- la fixation de l'unité d'appui (400) au niveau du support de machine (105) de la nacelle (104) et/ou au niveau des deux segments de générateur (10) ou plus, en particulier au niveau d'un stator segmenté du générateur segmenté (1) ; et/ou
- le décalage d'un rotor segmenté du générateur segmenté (1) relativement au stator segmenté du générateur segmenté (1) d'une position de transport à une position de fonctionnement d'un écart axial (A) le long d'un axe de rotation (D), dans lequel la position de fonctionnement est différente de la position de transport ; et/ou
- la fixation du rotor segmenté au niveau de l'unité d'appui (400) dans la position de fonctionnement et/ou
- la rotation du rotor segmenté (106) fixé au niveau de l'unité d'appui (400), et/ou
- la fixation de segments de générateur (10) voisins dans une direction circonférentielle les uns avec les autres en un générateur segmenté, en particulier la fixation des segments de rotor disposés voisins dans la direction circonférentielle en un rotor segmenté.
